(19) **Europäisches Patentamt / European Patent Office / Office européen des brevets**

(11) **EP 0 798 903 B1**

(12) **EUROPEAN PATENT SPECIFICATION**

(45) Date of publication and mention
of the grant of the patent:
**05.12.2007 Bulletin 2007/49**

(51) Int Cl.:
**_H04L 27/26_** _(2006.01)_

(21) Application number: **97105215.4**

(22) Date of filing: **27.03.1997**

(54) **Synchronisation of the local oscillator and of the sampling clock in a multicarrier receiver**

Synchronisierung des lokalen Oszillators und des Abtasttaktes in einem Mehrträgerempfänger

Synchronisation de l'oscillateur local et de l'horloge d'échantillonnage dans un récepteur de signaux multiporteurs

(84) Designated Contracting States:
**DE ES FR GB IT SE**

(30) Priority: **29.03.1996 JP 7659796**
     **31.01.1997 JP 1941197**

(43) Date of publication of application:
**01.10.1997 Bulletin 1997/40**

(73) Proprietor: **MATSUSHITA ELECTRIC INDUSTRIAL CO., LTD**
     **Kadoma-shi, Osaka (JP)**

(72) Inventors:
 • **Kimura, Tomohiro**
   **Kawachinagano-shi,**
   **Osaka-fu (JP)**
 • **Harada, Yasuo**
   **Kobe-shi,**
   **Hyogo-ken (JP)**

 • **Kageyama, Sadashi**
   **Sanda-shi,**
   **Hyogo-ken (JP)**
 • **Kisoda, Akira**
   **Moriguchi-shi,**
   **Osaka-fu (JP)**
 • **Hayashi, Kenichiro**
   **Katano-shi,**
   **Osaka-fu (JP)**
 • **Hayashino, Hiroshi**
   **Takarazuka-shi,**
   **Hyogo-ken (JP)**

(74) Representative: **Kloiber, Thomas et al**
     **Vonnemann Kloiber & Kollegen**
     **Patentanwälte**
     **Sckellstrasse 6**
     **81667 München (DE)**

(56) References cited:
     **EP-A- 0 653 858          EP-A- 0 656 706**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an OFDM demodulation apparatus for, from an OFDM (Orthogonal Frequency Division Multiplex) signal, demodulating the sampled OFDM signal in an effective symbol period, and more particularly to a technology for synchronizing a local carrier-wave signal and a sampling clock.

In recent years, a transmission method using an OFDM technology has attracted attention for use in digital audio broadcast for mobile receivers and terrestrial digital television broadcast.

The OFDM transmission method is one of various multicarrier modulation methods and structured such that series-parallel converted encoded data (information symbols) is assigned to a multiplicity of adjacent orthogonal sub-carriers, and then inverse-Fourier-transformed (signals in frequency domain are transformed into time domain) into digital modulated waves. Then, the digital modulated waves are added to one another so as to generate OFDM signals. After the transmission, a reverse process is performed so as to obtain original encoded data. Since the foregoing method involves the period of each of information symbols divided into sub-carriers being elongated, influences of delayed waves, such as multi-paths, can satisfactorily be eliminated.

EP A 0 653 858 discloses a receiver arrangement for OFDM time and frequency synchronisation based on correlations between the guard interval and the corresponding portion of the OFDM symbol. Disadvantageously, the frequency errors of the local oscillator and the sampling clock from the sampled OFDM signal may not be accurately determined at high speed and free from influence of noise.

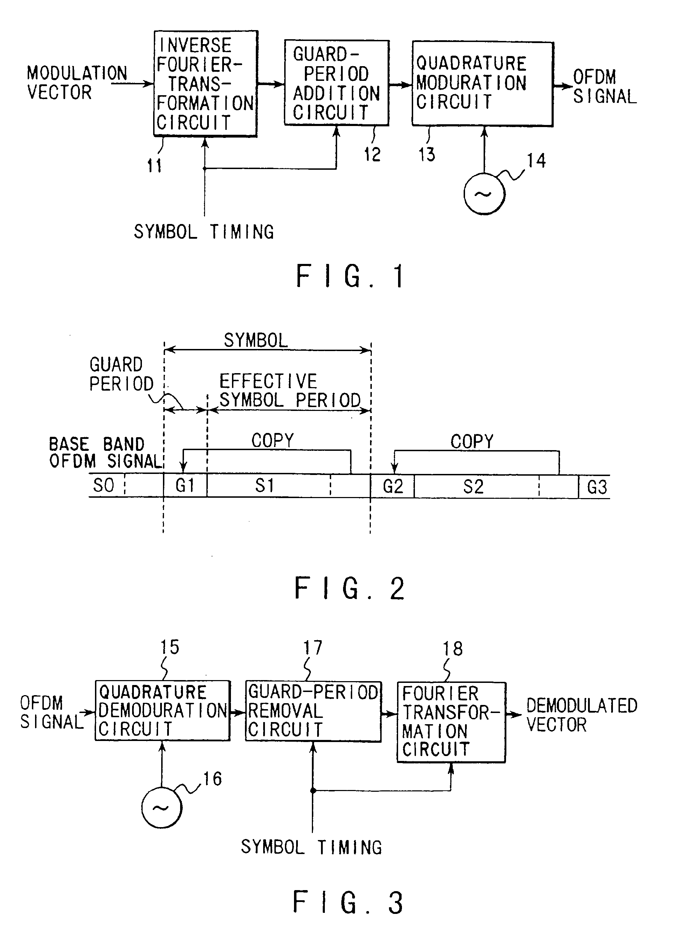

FIG. 1 is a block diagram showing the basic structure of an OFDM modulation apparatus at transmission side for generating an OFDM signal.

Referring to FIG. 1, an inverse Fourier transformation circuit 11 receives a plurality of sampled OFDM signals (information symbols) to, in symbol units, assign the sampled OFDM signals to a plurality of adjacent orthogonal sub-carriers to perform inverse Fourier transformation so as to convert signals in the frequency domain into signals in time domain. Thus, signals in effective symbol periods are obtained. The obtained signals are supplied to a guard-period addition circuit 12.

The guard-period addition circuit 12 sequentially extracts signals in the effective symbol periods from the inverse Fourier-transformation circuit 11 following the symbol timing signal to, for each symbol, locate the guard period in front of the effective symbol period. Then, a signal in the rear portion of the effective symbol period output from the inverse Fourier-transformation circuit 11 is copied to the guard period so as to form a base band OFDM signal. The format of the base band OFDM signal obtained by a guard-period addition circuit 12 is shown in FIG. 2. The OFDM signal is supplied to an quadrature modulation circuit 13.

The quadrature modulation circuit 13 uses a local carrier-wave signal generated by a local oscillation circuit 14 to subject the base band OFDM signal obtained by the guard-period addition circuit 12 to quadrature modulation so as to convert the frequency into an intermediate frequency band or a radio frequency band so as to output an OFDM signal.

FIG. 3 is a block diagram showing the basic structure of an OFDM demodulation apparatus for demodulating the OFDM signal at reception side.

Referring to FIG. 3, a quadrature demodulation circuit 15 receives the OFDM signal transmitted from the transmitting side to quadrature demodulate the OFDM signal with a local carrier-wave signal generated by a local oscillation circuit 16 so as to convert the frequency the OFDM signal in the intermediate frequency band or the radio frequency band into a base band OFDM signal. The OFDM signal is supplied to a guard-period removal circuit 17.

The guard-period removal circuit 17 removes the guard period from the OFDM signal converted into the base band by the quadrature demodulation circuit 15 so as to extract the signals in the effective symbol periods. The signals in the effective symbol periods are supplied to a Fourier transformation circuit 18.

The Fourier transformation circuit 18 Fourier-transforms each signal in the effective symbol period to convert the signal in the time domain into a signal in the frequency domain into a signal in the frequency domain so as to obtain a plurality of demodulated vectors (information symbols).

However, the OFDM demodulation apparatus having the foregoing structure has a problem in that shift of the frequency of the local carrier-wave signal obtained in the local oscillation circuit 16 from the modulated frequency obtained in the local oscillation circuit 14 of the OFDM modulation apparatus or shift of the frequency of the sampling clock for use in discrete transformation performed by the Fourier transformation circuit 18 causes the demodulated vector obtained by the Fourier transformation circuit 18 encounters mutual interference of sub-carriers.

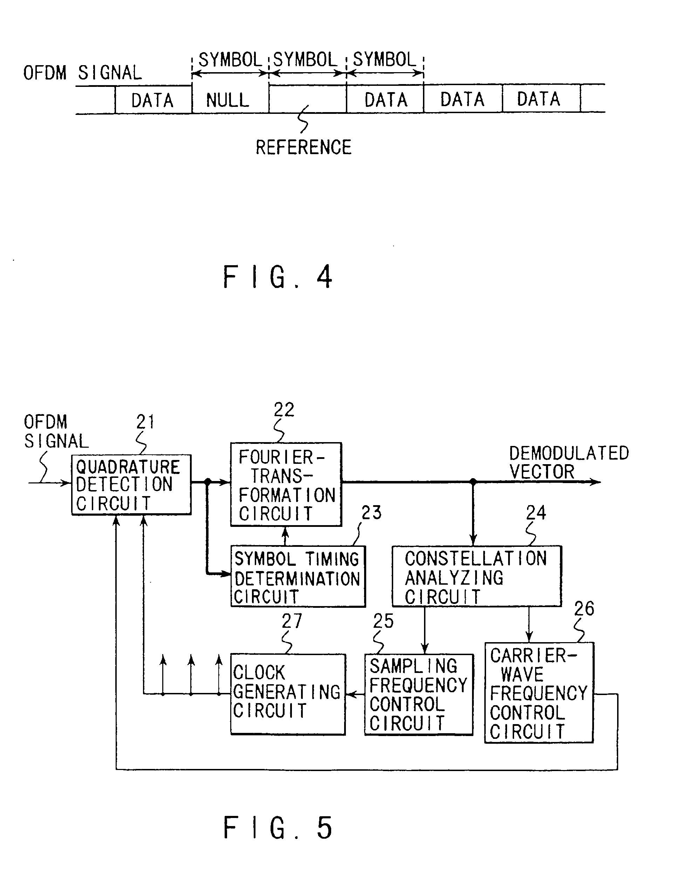

Accordingly, the frequency of the local carrier wave signal and the frequency of the sampling clock have been synchronized with each other by a method structured, as shown in FIG. 4, such that null symbols, the voltage of each of which has been suppressed, or reference symbols each of which is composed of a known specific signal a periodically added to the OFDM signal before the OFDM signal is transmitted.

However, the foregoing transmission method, in which the null symbols or the reference symbols are frequently transmitted, suffers from deterioration in the efficiency of the transmission. If the frequency at which the null symbols or the reference symbols are transferred is lowered to prevent deterioration in the transferring efficiency, an error is made in synchronization established between the frequency of the local carrier-wave signal and the frequency of the sampling clock.

To overcome the foregoing problems, a method has been disclosed in Japanese Patent Laid-Open No. 7-143096 in which the synchronization between the frequency of the local carrier-wave signal and the sampling frequency is established without the null symbol or the reference symbol. The conventional OFDM demodulation apparatus disclosed in the above-mentioned disclosure will now be described with reference to FIG. 5.

FIG. 5 is a block diagram showing the conventional OFDM demodulation apparatus. A quadrature detection circuit 21 receives an OFDM signal so as to, for each sampling clock, output sampled OFDM signals, each of which is obtained by quadrature detecting the OFDM signal with a local carrier-wave signal generated therein. The sampled OFDM signals are supplied to a Fourier-transformation circuit 22 and a symbol timing determination circuit 23.

The symbol timing determination circuit 23 uses a fact that a signal in the rear portion of the effective symbol period has been copied to the guard period of the OFDM signal to obtain the correlation between the signal obtained by delaying the sampled OFDM signal by length of the effective symbol period and the sampled OFDM signal which has been directly received in order to determine the symbol timing. Then, the symbol timing determination circuit 23 notifies the effective symbol period to the Fourier-transformation circuit 22.

The Fourier-transformation circuit 22, for each symbol, extracts the sampled OFDM signal in the effective symbol period to Fourier-transform the extracted signal so as to output the same as demodulated vector. The demodulated vector is also supplied to a constellation analyzing circuit 24.

The constellation analyzing circuit 24 extracts two or more demodulated vectors of sub-carriers having different frequencies to obtain a frequency error of the local carrier-wave signal for the orthogonal detection and that of the sampling clock in accordance with the phase rotation of the constellations of the demodulated vectors so as to generate a carrier-wave frequency error signal and a sampling frequency error signal. The sampling frequency error signal is supplied to a sampling frequency control circuit 25, while the carrier-wave frequency error signal is supplied to a carrier-wave frequency control circuit 26.

In response to the sampling frequency error signal supplied from the constellation analyzing circuit 24, the sampling frequency control circuit 25 controls the frequency of the sampling clock which is generated by the clock generating circuit 27. In response to the carrier-wave frequency error signal supplied from the constellation analyzing circuit 24, the carrier wave frequency control circuit 26 controls the frequency of the local carrier-wave signal for the orthogonal detection generated in the quadrature detection circuit 21.

The clock generating circuit 27 supplies the sampling clock to each section of the OFDM demodulation apparatus. The sampling frequency of the sampling clock is controlled in response to a sampling frequency control signal supplied from the sampling frequency control circuit 25.

The operation of the conventional OFDM demodulation apparatus will now be described.

As disclosed in Japanese Patent Laid-Open No. 7-143096, the conventional OFDM demodulation apparatus has the constellation analyzing circuit 24 which analyzes the phase rotation of the constellation obtained from the demodulated vectors of the sub-carriers having two or more different frequencies so that the frequency error of the local carrier-wave signal and the frequency error of the sampling clock are detected.

The foregoing operation is performed by using facts that the phase rotation of the demodulated vector obtained by Fourier-transforming the OFDM signal by the Fourier-transformation circuit 22 is obtained from the error of the carrier-wave frequency and the error of the sampling frequency and that the phase rotational angle given to the demodulated vector from the error of the carrier-wave frequency and the phase rotational angle given to the demodulated vector from the error of the sampling frequency are different from each other in accordance with the frequency of the sub-carrier.

Since the demodulated vector includes the phase rotation caused from the original modulation by the modulation vectors, the constellation analyzing circuit 24 must superimpose the demodulated vectors for a plurality of symbols to obtain the constellation in order to obtain the rotational angle of the overall constellation.

However, the conventional OFDM demodulation apparatus disclosed as described above has the structure such that the Fourier-transformation is performed in the state where the frequency of the local carrier-wave signal for the orthogonal detection and the frequency of the sampling clock are shifted from each other. Therefore, mutual interference between sub-carrier prevents accurate demodulated vector to be obtained. Therefore, the constellation analyzing circuit cannot sometimes accurately obtain the frequency error of the local carrier-waves signal and that of the sampling clock.

Since the demodulated vectors must be observed for a plurality of symbols in order to obtain the constellation, an excessively long time is required to extract the frequency error of the local carrier wave signal and that of the sampling clock.

If each sub carrier is multi-level modulated at, for example, 64 QAM, an error is easily made in the result of the analysis of the constellation due to noise or the like. Thus, the synchronization of the frequency of the local carrier-wave signal and that of the sampling clock is disturbed.

An object of the present invention is to provide an OFDM demodulation apparatus capable of obtaining accurately the frequency errors of the local oscillator and the sampling clock from the sampled OFDM signal at high speed and free from influence of noise, even if the frequencies of the local oscillator and the sampling clock are shifted. In order to achieve the foregoing object, according to one aspect of the present invention, there is provided an OFDM demodulation apparatus for converting a received OFDM (Orthogonal Frequency Division Multiplex) signal, one symbol of which is composed of a guard period and an effective symbol period and in which a portion of a signal in the effective symbol period is copied to the guard period in order to realize periodicity in the symbol, into an OFDM signal in the base band in response to a local carrier-wave signal generated by local oscillation means (314); generating, from the OFDM signal in the base band a sampled OFDM signal in response to a sampling clock signal generated by sampling clock generating means (39); and demodulating the sampled OFDM signal in the effective symbol period, said OFDM demodulation apparatus comprising:

correlation vector acquiring means (33 to 37) comprising a delay circuit (33, (45,46)) and a correlation circuit (36, 37) to acquire correlation vectors between a signal in the guard period an a signal in the corresponding effective symbol period, whereby either the sampled OFDM signal is correlated directly with either the sampled OFDM signal delayed by the delay circuit (33, (45, 46)) then filtered by filter means (34, 35), or the sampled OFDM signal filtered by filter means (34, 35) then delayed by the delay circuit (33,(45, 46));
or the sampled OFDM signal is correlated after being filtered by filter means (41, 42, 43, 44) with either the sampled OFDM signal delayed by the delay circuit (33, (45, 46)) then filtered by filter means (34, 35), or the sampled OFDM signal
filtered by filter means (34, 35) then delayed by the delay circuit (33, (45, 46)), or the delayed sampled OFDM signal, frequency control means (38), consisting of,

- an addition circuit (383) adding the phase angle of a first correlation vector obtained by a phase angle calculation circuit (381) to the phase angle of a second correlation vector obtained by a second phase angle calculation ciruit (382),
- and, a substraction circuit (386) substracting the phase angle of the second correlation vector form the phase angle of the first correlation vector, for obtaining a frequency error of each of the local carrier-wave signal and the sampling clock signal in accordance with the plurality of correlation vectors obtained by said correlation vector acquiring means (33 to 37),
and generating a carrier-wave frequency control signal and a sampling frequency control signal to output the generated signals to said local oscillation means (314) and said sampling clock generating means (39), being characterized in that
the correlation vector acquiring means (33 to 37) comprise first and second filter means (34, 35841, 42, 43, 44)),
- either said first filter means (34) o said second filter means (35) has a filtering characteristic for mainly permitting a signal component in a frequency region higher than the central frequency of the OFDM signal to pass through, and the other filter means has a filtering characteristic for mainly permitting a signal component
- in a frequency region lower than the central frequency of the OFDM signal to pass through,
- or, either said first filter means (34) or said second filter means (35) has a passing characteristic which is even-symmetrical with respect to the central frequency of the OFDM signal and the other filter means has apassing characteristic which is odd-symmetrical with respect to the central frequency in the OFDM signal.

This invention can be more fully understood from the following detailed description when taken in conjunction with the accompanying drawings, in which:

FIG. 1 is a circuit diagram showing the basic structure of a transmission-side OFDM modulation apparatus;
FIG. 2 is a diagram showing the format of an OFDM signal in a base band in order to describe the operation of the OFDM modulation apparatus show in FIG. 1;
FIG. 3 is a circuit diagram showing the basic structure of a reception-side OFDM demodulation apparatus;
FIG. 4 is a timing chart of the pattern of an OFDM signal into which a null symbol and a reference symbol has been inserted;
FIG. 5 is a circuit diagram showing the structure of a conventional OFDM demodulation apparatus for synchronizing the frequency of carrier-wave frequency and the frequency of the sampling clock without the null symbol and the reference symbol;
FIG. 6 is a circuit diagram showing the structure of an OFDM demodulation apparatus according to a first embodiment of the present invention;
FIG. 7 is a circuit diagram showing the structure of a quadrature detection circuit according to the first embodiment;
FIGS. 8A and 8B are diagrams showing frequency spectrum distribution for describing the operation of the quadrature detection circuit according to the first embodiment;

FIG. 9 is a circuit diagram showing the structure of a first filter circuit according to the first embodiment.

FIG. 10 is a graph showing frequency-amplitude characteristic of the first filter circuit shown in FIG. 9;

FIG. 11 is a circuit diagram showing a second filter circuit according to the first embodiment;

FIG. 12 is a graph showing frequency-amplitude characteristic of the second filter circuit shown in FIG. 11;

FIG. 13 is a circuit diagram showing the structure of a correlation circuit according to the first embodiment;

FIG. 14 is a circuit diagram showing another structure of the correlation circuit according to the first embodiment;

FIGS. 15A to 15C are timing charts showing timings of respective sections and correlation of the signals to describe the operation of the first embodiment;

FIG. 16 is a circuit diagram showing the structure of a frequency control circuit according to the first embodiment;

FIG. 17 is a circuit diagram showing the structure of a symbol timing determination circuit according to the first embodiment;

FIG. 18 is a circuit diagram showing a first filter circuit according to a second embodiment of the present invention;

FIG. 19 is a graph showing frequency-amplitude characteristic of the first filter circuit shown in FIG. 18;

FIG. 20 is a circuit diagram showing the structure of a second filter circuit according to the second embodiment;

FIG. 21 is a graph showing frequency-amplitude characteristic of the second filter circuit shown in FIG. 20;

FIG. 22 is a circuit diagram showing the structure of a frequency control circuit according to the second embodiment;

FIG. 23 is a circuit diagram showing an OFDM demodulation apparatus according to a third embodiment of the present invention;

FIG. 24 is a circuit diagram showing an OFDM demodulation apparatus according to a fourth embodiment of the present invention;

FIG. 25 is a circuit diagram showing an OFDM demodulation apparatus according to a fifth embodiment of the present invention; and

FIG. 26 is a circuit diagram showing an OFDM demodulation apparatus according to a sixth embodiment of the present invention.

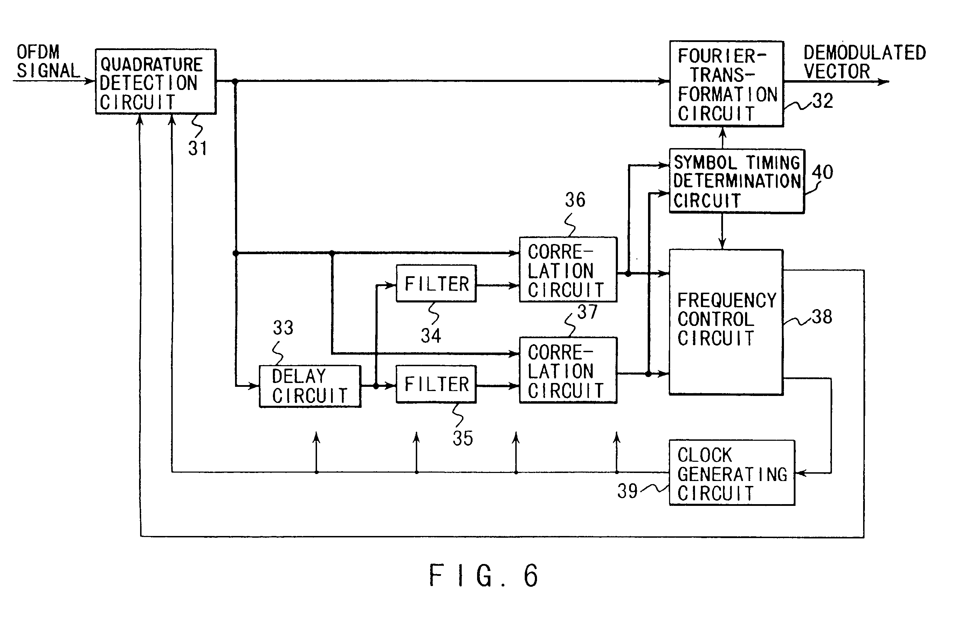

Referring to FIGS. 6 to 26, embodiments of the present invention will now be described.

FIG. 6 is block diagram showing the structure of an OFDM demodulation apparatus according to a first embodiment of the present invention.

Referring to FIG. 6, a quadrature detection circuit 31 detects, by quadrature detection, a supplied OFDM signal in response to a local carrier-wave signal generated therein converts the OFDM signal to a base band OFDM signal, and output this signal as a sampled OFDM signal in response to a sampling clock pulse. The sampled OFDM signals are, at each sampling clock, supplied to a Fourier transformation circuit 32 and to a delay circuit 33. Simultaneously the sampled OFDM signals are supplied to first and second correlation circuits 36 and 37.

The delay circuit 33 delays the sampled OFDM signals output from the quadrature detection circuit 31 by a degree of clocks corresponding to an effective symbol period of the sampling clock. The outputs from the delay circuit 33 are supplied to the first and second filter circuits 34 and 35.

The first and second filter circuits 34 and 35 allow signal components having different frequency regions of the sampled OFDM signals delayed by the delay circuit 33 respectively to pass through. The signal component output from the first filter circuit 34 is, together with the sampled OFDM signal output from the quadrature detection circuit 31, supplied to the first correlation circuit 36. Similarly, the signal component output from the second filter circuit 35 is, together with the sampled OFDM signal output from the quadrature detection circuit 31, supplied the second correlation circuit 37.

The first correlation circuit 36 detects the correlation between the output signal from the first filter circuit 34 and the sampled OFDM signal to output the detected correlation as a first correlation vector. The second correlation circuit 37 detects the correlation between a signal output from the second filter circuit 35 and the sampled OFDM signal to output the detected correlation as a second correlation vector. The first and second correlation vectors obtained by the first and second correlation circuits 36 and 37 are supplied to a frequency control circuit 38 and a symbol timing determination circuit 40.

The frequency control circuit 38 extracts the first and second correlation vectors in response to a symbol timing signal to detect a frequency error of a local carrier-wave signal and a frequency error of the sampling clock so as to generate a carrier-wave frequency control signal and a sampling frequency control signal. The carrier-wave frequency control signal output from the frequency control circuit 38 is supplied to the quadrature detection circuit 31 so as to be used to control the frequency of the local carrier-wave signal generated within the quadrature detection circuit 31.

The clock generating circuit 39 supplies the sampling clock to each section of the OFDM demodulation apparatus, the details of the supply are omitted from illustration. The frequency of the sampling clock is controlled in accordance with a sampling frequency control signal output from the frequency control circuit 38.

On the other hand, the symbol timing determination circuit 40 detects the boundary of the symbol of the sampled OFDM signal from the first and second correlation vectors to obtain the symbol timing signals indicating the timing of the boundary. The symbol timing signals are supplied to the Fourier transforming circuit 32 and the frequency control circuit 38.

The Fourier transforming circuit 32 extracts the sampled OFDM signal in the effective symbol period in response to the symbol timing signal to transform the time domain to a frequency domain by Fourier transformation so as to obtain a demodulation vector (an information symbol).

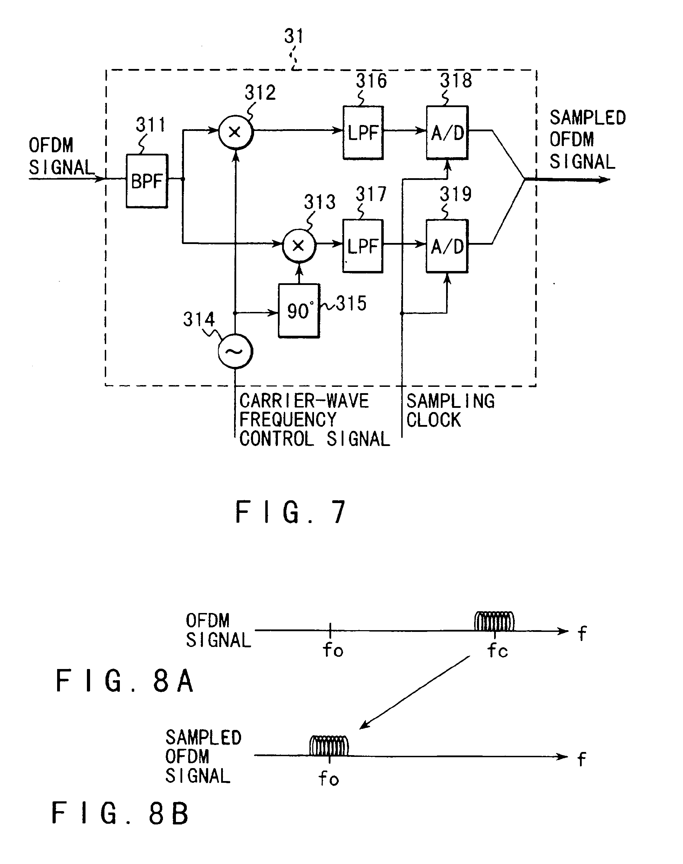

The quadrature detection circuit 31 may be structured, for example, as shown in FIG. 7. Referring to FIG. 7, the OFDM signal supplied to the quadrature detection circuit 31 is, by a BPF (a Band Pass Filter) 311, subjected to a process for removing noise except the frequency band required to perform demodulation, and then supplied to multiplier circuits 312 and 313.

A local oscillation circuit 314 comprises an oscillator, the oscillation frequency of which is controlled by the carrier-wave frequency control signal. The local oscillation circuit 314 outputs the local carrier-wave signals to a multiplier circuit 312 and a phase-shifting circuit 315. The phase-shifting circuit 315 shifts the phase of the local carrier-wave signal by an angular degree of 90°. The output from the phase-shifting circuit 315 is supplied to the multiplier circuit 313.

The multiplier circuit 312 multiplies the OFDM signal supplied from the BPF 311 and the local carrier-wave signal supplied from the local oscillation circuit 314 with each other. The output from the multiplier circuit 312 is supplied to a LPF (Low Pass Filter) 316 so that the harmonic component is removed from the supplied output. As a result, a detection signal having the in-phase component with respect to the local carrier-wave signal can be obtained from the LPF 316.

On the other hand, the multiplier circuit 313 multiplies the OFDM signal supplied from the BPF 311 and the local carrier-wave signal, the phase of which has been shifted by 90° by the phase-shifting circuit 315, with each other. The output from the multiplier circuit 313 is supplied to a LPF 317 so that the harmonic component of the supplied output is removed. As a result, a detection signal of the quadrature phase component with respect to the local carrier-wave signal can be obtained from the LPF 317.

The thus-obtained in-phase detection signal and the quadrature phase detection signal respectively are, for each sampling clock, quantized by A/D conversion circuits 318 and 319 so as to be output as the sampled OFDM signal from the quadrature wave detection circuit 31.

The operation of the quadrature detection circuit 31 corresponds to frequency conversion for converting the OFDM signal (see FIG. 8A) near oscillation frequency fc of the local oscillation circuit 314 into the sampled OFDM signal (see FIG. 8B) in the base band frequency (central frequency f0).

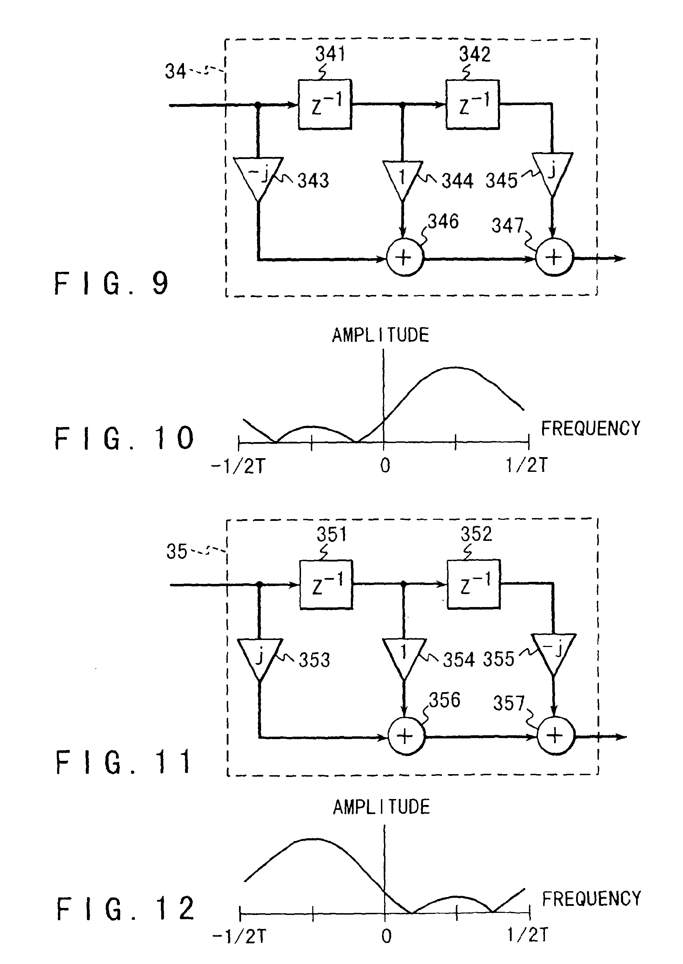

The first filter circuit 34 may be structured, for example, as shown in FIG. 9. Referring to FIG. 9, delay circuits ($Z^{-1}$) 341 and 342, by one sampling clock, sequentially delay the sampled OFDM signals supplied to the first filter circuit 34. The supplied sampled OFDM signals and the sampled OFDM signals delayed by the delay circuits 341 and 342 respectively are supplied to coefficient circuits 343, 344 and 345.

The coefficient circuit 343 multiplies the sampled OFDM signal by - j (j is an imaginary number unit). The coefficient circuit 344 multiplies the sampled OFDM signal, delayed by one sampling clock, by 1. The coefficient circuit 345 multiplies the sampled OFDM signal, delayed by two sampling clocks, by j. The outputs from the coefficient circuits 343 and 344 are added to each other by an adder 346. Moreover, the output from the coefficient circuit 345 is, by the addition circuit 347, added so as to be an output from the first filter circuit 34.

The frequency-amplitude characteristic of the first filter circuit 34, as shown in FIG. 10, has a characteristic such that signals mainly in the positive frequency region with respect to the central frequency f0 in the base band frequency, are allowed to pass through. Moreover, the characteristic has the group delay time characteristic of one sampling clock.

The coefficient circuit 343 can easily be realized by forming its structure such that the real part and the imaginary part of the sampled OFDM signal are switched to each other and then the polarity of the imaginary part is inverted. The coefficient circuit 344 may be omitted from the structure, as passing through a signal. The coefficient circuit 345 can easily be realized by forming its structure such that the real part and the imaginary part of the sampled OFDM signal are switched to each other and then the polarity of the real part is inverted.

On the other hand, the second filter circuit 35 Referring to FIG. 11, delay circuits ($Z^{-1}$) 351 and 352, by one sampling clock, sequentially delay the sampled OFDM signals supplied to the second filter circuit 35. The supplied sampled OFDM signals and the sampled OFDM signals delayed by the delay circuits 351 and 352 respectively are supplied to coefficient circuits 353, 354 and 355.

The coefficient circuit 353 multiplies the sampled OFDM signal by j. The coefficient circuit 354 multiplies the sampled OFDM signal, delayed by one sampling clock, by 1. The coefficient circuit 355 multiplies the sampled OFDM signal, delayed by two sampling clocks, by - j. The outputs from the coefficient circuits 353 and 354 are added to each other by an adder circuit 356. Moreover, the output from the coefficient circuit 355 is by the addition circuit 357, added so as to be an output from the second filter circuit 35.

The frequency-amplitude characteristic of the second filter circuit 35, as shown in FIG. 12, has a characteristic such that signals mainly in the negative frequency region with respect to the central frequency f0 in the base band, are allowed to pass through and a group delay characteristic of one sampling clock.

The coefficient circuit 353 can easily be realized by forming its structure such that the real part and the imaginary part of the sampled OFDM signal are switched and then the polarity of the real part is inverted. The coefficient circuit 354 may be omitted from the structure, as passing through a signal, the coefficient circuit 355 can easily be realized by forming its structure such that the real part and the imaginary part of the sampled OFDM signal are switched to each other and then the polarity of the imaginary part is inverted.

Referring to FIG. 6, the number of clocks with which the sampled OFDM signal is delayed by the delay circuit 33 is the number of clocks corresponding to time obtained by subtracting the group delay time periods of the first and second filter circuits 34 and 35 from the effective symbol period. If the first and second filter circuits 34 and 35 have the structures as shown in FIGS. 9 and 11, the group delay time period of the first and second filter circuits 34 and 35 is one clock. Therefore, the number of clocks delayed by the delay circuit 33 may be one clock less than the number of clocks corresponding to the effective symbol period.

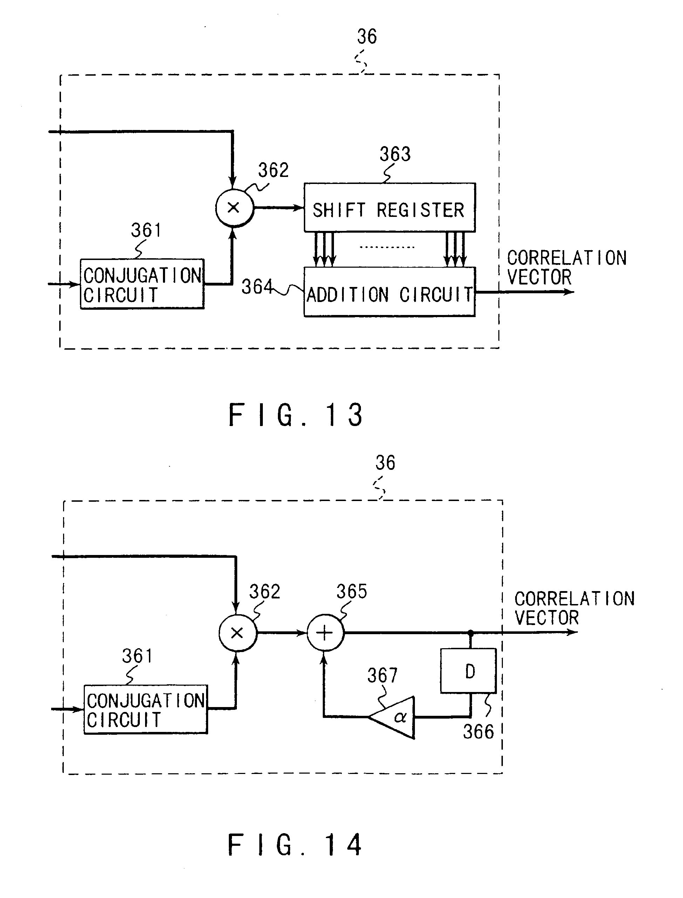

The first and second correlation circuits 36 and 37 have the same structures. For example, the first correlation circuit 36 may be structured as shown in FIG. 13 (the structure of the second correlation circuit 37 is omitted from illustration). Referring to FIG. 13, one of the two sampled OFDM signals supplied to the first correlation circuit 36 is converted into a conjugation signal by a conjugation circuit 361. The other sampled OFDM signal is, by a multiplier circuit 362, complex-multiplied by a signal output from the conjugation circuit 361.

A signal output from the multiplier circuit 362 is held by a shift register 363 for a predetermined period. The shift register 363, in parallel, outputs the signals in the period held by the sift register 363. The parallel outputs are supplied to the addition circuit 364. The addition circuit 364 obtains the total sum of signals, in parallel, output from the shift register 363. That is, the shift register 363 and the addition circuit 364 form an integrator circuit.

The first correlation circuit 36 (and the second correlation circuit 37) may have another structure, for example, as shown in FIG. 14. The structure shown in FIG. 14 is different from that shown in FIG. 13 in the portions corresponding to the shift register 363 and the addition circuit 364 forming the integrator circuit.

Referring to FIG. 14, the holding circuit 366 holds a correlation vector preceding by one sampling clock. The coefficient circuit 367 multiplies the correlation vector held by the holding circuit 366 by attenuation factor $\alpha$ ($\alpha$ is a real number and more than 0 and less than 1). The addition circuit 365 adds the output from the multiplier circuit 362 and the correlation vector obtained by multiplying the attenuation factor $\alpha$ in the coefficient circuit 367 to each other so as to obtain a correlation vector. The holding circuit 366, at each sampling clock, updates the value of the correlation vector held therein to the value of the correlation vector obtained by the addition circuit 365.

That is, the addition circuit 365, the holding circuit 366 and the coefficient circuit 367 form an integrator circuit having a time constant of $1/\alpha$, the integrator circuit being able to operate similarly to the integrator circuit formed by the shift register 363 and the addition circuit 364 and shown in FIG. 13.

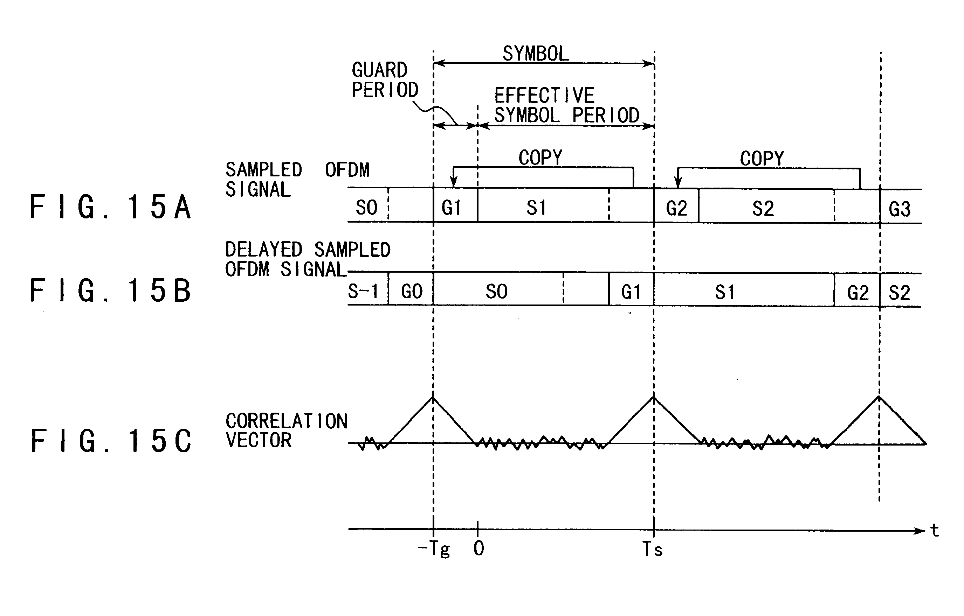

FIGS. 15A to 15C shows a process for obtaining the first and second correlation vectors by the first and second correlation circuits 36 and 37 from the sampled OFDM signal obtained by the quadrature detection circuit 31.

FIG. 15A shows the sampled OFDM signal output from the quadrature detection circuit 31. The OFDM demodulation apparatus according to the present invention demodulates an OFDM signal having a structure formed by copying a signal in the rear portion of the effective symbol period of the sampled OFDM signal to a guard period formed in front of the effective symbol period. The sampled OFDM signal is delayed by the delay circuit 33 by a degree corresponding to the effective symbol period, as shown in FIG. 15B, and then divided into signals having different frequency regions by the first and second filter circuits 34 and 35.

In order to simplify the description, the effect of selecting the frequency of each of the first and second filter circuits 34 and 35 is ignored. Thus, the first and second filter circuits 34 and 35 output the delayed sampled OFDM signal. The first and second correlation circuits 36 and 37 obtain the correlation between the sampled OFDM signal shown in FIG. 15A and the sampled OFDM signal delayed by the effective symbol period, as shown in FIG. 15B. At this time, the signal in the rear portion of the effective symbol period has been copied to the guard period. Therefore, the correlation vector of the signals above has a large absolute value in a portion (portions indicated by symbols - Tg and Ts shown in FIG. 15C) in which the signal waveforms coincide with each other, as shown in FIG. 15C.

Although the phase angle at a peak point of the correlation vector is zero in a case where the frequencies of the local carrier-wave signal and the sampling clock have no error, a phase angle corresponding to the error exists if the frequencies of the local carrier-wave signal and the sampling clock have an error.

The phase angle of the first and second correlation vectors obtainable from the first and second correlation circuits 36 and 37 will now be described which exist if the frequencies of the local carrier-wave signal and the sampling clock have an error.

If the frequency of the local carrier-wave signal has no error, sampled OFDM signal s (t) output from the quadrature detection circuit 31 in a period of a certain symbol (for example, a symbol for transferring S1 shown in FIG. 15A) is expressed by Equation (1). Referring to Equation (1) symbol dk indicates a modulation vector of sub-carrier k. Symbol $\omega$k is an angular frequency of the sub-carrier k, the angular frequency being integer times 2n/Ts(Ts is the length of the effective symbol period). The leading end of the effective symbol period is made to be t = 0, as shown in FIG. 15A

$$s(t) = \sum_{k=0}^{N-1} d_k \cdot e^{j\omega_k t} \; (-T_g \le t \le T_S) \qquad \text{...} \; (1)$$

The operations performed by the first and second correlation circuits 36 and 37 for obtaining the correlation vector c (t) between the signal s (t - Ts), delayed by the effective symbol period Ts after being passed through the delay circuit 33 and the first and second filter circuits 34 and 35, and the sampled OFDM signal s (t) which has been directly supplied are expressed by Equation (2).

$$C(t) = \int_{-T_g}^{0} s(t + \tau) \cdot s^*(t - T_S + \tau) d\tau \qquad \text{...} \; (2)$$

with "*" being: conjugated complex.

Since the correlation operations of the OFDM signal component sk (t) of the sub-carrier k, which are performed by the first and second correlation circuits 36 and 37, are expressed by Equation (3), the correlation vector Ck (t) of the sub-carrier k is expressed by Equation (4).

$$s_k(t) = d_k \cdot e^{j\omega_k t} \qquad \text{...} \; (3)$$

$$C_k(t) = \int_{-T_g}^{0} s(t + \tau) \cdot s_k^*(t - T_S + \tau) d\tau \qquad \text{...} \; (4)$$

Assuming that time, at which the frequency error of the local carrier-wave signal and the sampling clock is detected from the correlation vector, is time (t = Ts) at which the magnitude of the correlation vector is made to be the largest, the correlation vector Ck (Ts) at time Ts is expressed by Equation (5). As can be understood from Equation (5), the phase angle of the correlation vector Ck (Ts) is zero.

$$\begin{aligned}
C_k(T_s) &= \int_{-T_g}^{0} s_k(T_s + \tau) \cdot s_k^*(\tau) d\tau \\
&= d_k d_k^* \int_{-T_g}^{0} e^{j\omega_k(T_s + \tau)} e^{-j\omega_k \tau} d\tau \\
&= |d_k|^2 e^{j\omega_k T_s} \int_{-T_g}^{0} d\tau \\
&= |d_k|^2 T_g \qquad \qquad \cdots \; (5)
\end{aligned}$$

If the frequency of the local carrier-wave signal has error $\Delta\omega$ and the length of the effective symbol period has error $\Delta T$ due to the shift of the frequency of the sampling clock, the sampled OFDM signal sk (t) is made to be as expressed in Equation (6). Thus, the correlation vector Ck (Ts + $\Delta$t) is made to be as expressed by Equation (7). Note that $\Delta\omega\Delta T$ is omitted from Equation (7) because it is a small value.

$$s_k'(t) = d_k \cdot e^{j(\omega_k + \Delta\omega)t} \qquad \cdots \; (6)$$

$$C_k(T_S + \Delta T) = \int_{-T_g}^{0} s_k(T_S + \Delta T + \tau) \cdot s_k{}^*(\tau)d\tau$$

$$= |d_k|^2 e^{j(\omega_k + \Delta\omega)(T_S + \Delta T)} \int_{-T_g}^{0} d\tau$$

$$= |d_k|^2 T_g e^{j(\Delta\omega T_S + \omega_k \Delta T + \Delta\omega \Delta T)}$$

$$= |d_k|^2 T_g e^{j(\Delta\omega T_S + \omega_k \Delta T)} \qquad \cdots \ (7)$$

Assuming that the phase angle of the correlation vector $C_k (T_S + \Delta T)$ is $\phi_k$, the phase angle is as expressed by Equation (8).

$$\phi_k = \Delta\omega T_S + \omega_k \Delta T \qquad \cdots \ (8)$$

As can be understood from Equation (8), the phase angle of the correlation vector is $\Delta\omega T_S$ with respect to the error $\Delta\omega$ of the frequency of the local carrier-wave signal regardless of the frequency $w_k$ of the sub-carrier. The phase angle is $\omega_k \Delta T$ in proportion to the frequency $\omega_k$ with respect to the error $\Delta T$ in the effective symbol period generated due to the shift of the frequency of the sampling clock.

Accordingly, signals in the negative frequency region obtainable from the first and second filter circuits 34 and 35 are used, and the correlation vectors with respect to the sampled OFDM signal are obtained by the first and second correlation circuits 36 and 37. Thus, the error $\Delta\omega$ of the frequency of the local carrier-wave signal can be estimated from the sum of the phase angles of the respective correlation vectors by the frequency control circuit 38. Moreover, the error $\Delta T$ in the effective symbol period occurring due to the shift of the frequency of the sampling clock can be estimated from the difference between the phase angles of the respective correlation vectors by the frequency control circuit 38.

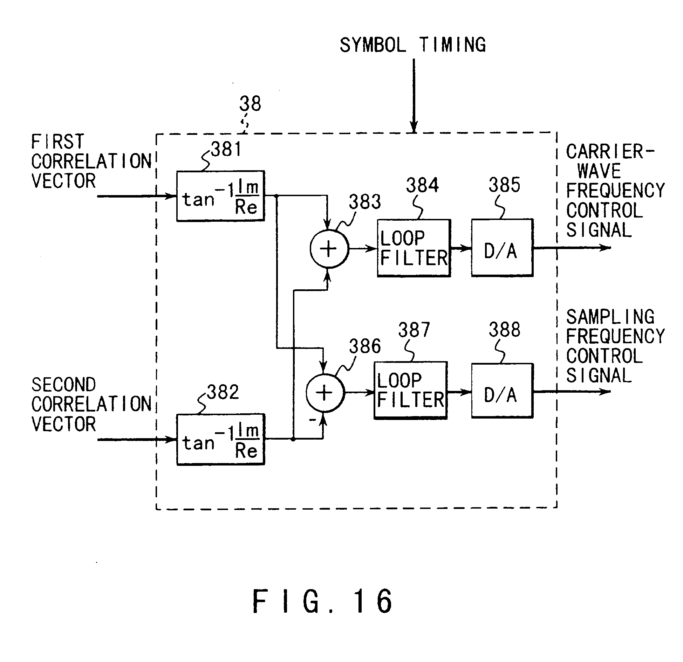

The frequency control circuit 38 for controlling the frequency of the local carrier-wave signal and that of the sampling clock may be formed, for example, as shown in FIG. 16.

Referring to FIG. 16, phase-angle calculation circuits ($\tan^{-1}$ (IM/RE), in which Re is a real part and IM is imaginary part) 381 and 382 respectively obtain the phase angle of each of the first and second correlation vectors. An addition circuit 383 adds the phase angle of the first correlation vector obtained by the phase angle calculation circuit 381 and the phase angle of the second correlation vector obtained by the phase angle calculation circuit 382 to each other. The circuit 383 therefore obtains a value in accordance with the error $\Delta\omega$ of the frequency of the local carrier wave signal as described above. The value thus obtained is supplied to a loop filter 384.

The loop filter 384 acts to determine the response of a carrier-wave frequency control loop by amplifying or damping and smoothing the frequency error signal of the local carrier-wave signal. A D/A conversion circuit 385 converts a numerical output from the loop filter 384 into analog voltage. The D/A conversion circuit 385 transmits a signal denoting the obtained analog voltage level as a carrier-wave frequency control signal to the local oscillation circuit 314 of the quadrature detection circuit 31.

The order of the loop filter 384 and the D/A conversion circuit 385 may be switched. If the local oscillation circuit 314 for use in the quadrature detection circuit 31 is a numerical controlled circuit, the D/A conversion circuit 385 is omitted from the structure.

A subtraction circuit 386 subtracts the phase angle of the second correlation vector obtained by the phase angle calculation circuit 382 from the phase angle of the first correlation vector obtained by the phase angle calculation circuit 381 so as to obtain a value in accordance with the error $\Delta T$ in the effective symbol period occurring due to the shift of the frequency of the sampling clock.

A loop filter 387 acts to determine the response of the sampling frequency control loop by amplifying or damping and smoothing the frequency error signal of the sampling clock. A D/A conversion circuit 388 converts the numerical output from the loop filter 387 into analog voltage. The signal output from the D/A conversion circuit 388 is supplied to the clock generating circuit 39.

The clock generating circuit 39 performs control to raise the sampling frequency in accordance with the sampling frequency control signal if the error $\Delta T$ in the effective symbol period is positive. If the error $\Delta T$ in the effective symbol period is negative, the clock generating circuit 39 performs control to lower the sampling frequency.

The order of the loop filter 387 and the D/A conversion circuit 388 may be switched. If the oscillator in the clock generating circuit 39 is a numerical controlled oscillator, the D/A conversion circuit 388 is omitted from the structure.

It is preferable that the operation, which is performed by the frequency control circuit 38, be carried out when the magnitude of the first and second correlation vectors are made to be the largest in order to improve the noise resistance. Accordingly, the frequency control circuit 38 receives, from the symbol timing determination circuit 40, a symbol timing signal at the moment at which the first and second correlation vectors are determined to be the largest to perform the calculation at the timing.

As a result, the frequency error of the local carrier-wave signal and the sampling clock can accurately be obtained for each symbol without dependency on the method of modulating the sub-carrier. Thus, the synchronization of the frequencies of the local carrier-wave signal and the sampling clock can accurately be pulled in.

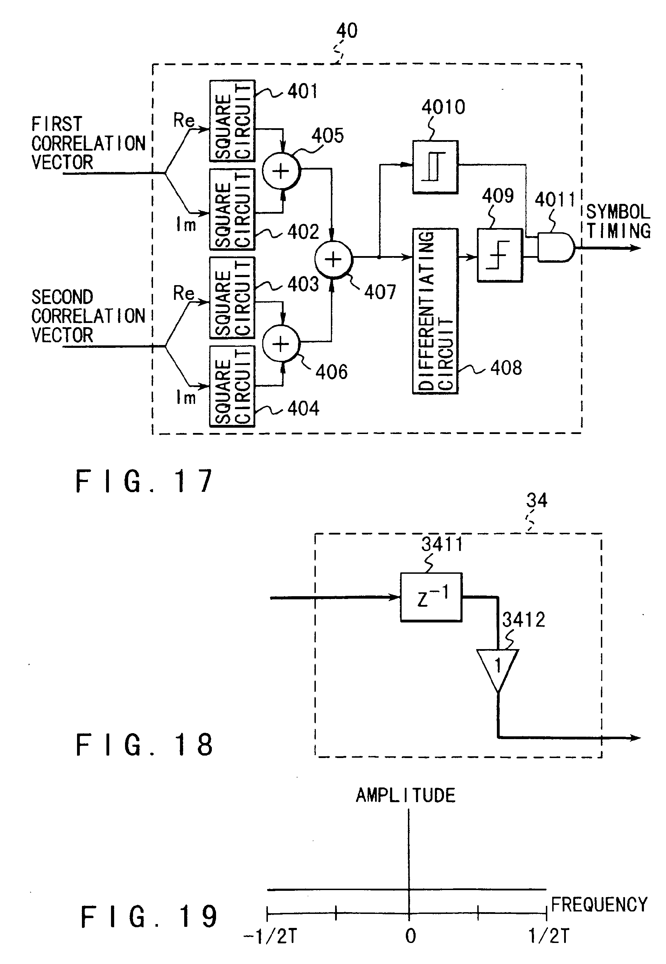

The symbol timing determination circuit 40 may be structured, for example, as shown in FIG. 17.

Referring to FIG. 17, the real part (Re) and the imaginary part (Im) of the first correlation vector respectively are squared by square circuit 401 and 402, and then added to each other by an addition circuit 405. Thus, the square of the absolute value of the second correlation vector can be obtained. The real part (Re) and the imaginary part (Im) of the second correlation vector respectively are squared by square circuits 403 and 404, and then added to each other by an addition circuit 406. Thus, the square of the absolute value of the second correlation vector can be obtained.

Results of the addition operations performed by the addition circuits 405 and 406 are added to each other by an addition circuit 407 so that the sum of the square of the absolute values of the first and second correlation vectors is obtained. An output signal from the addition circuit 407 is differentiated by a differentiating circuit 408 in terms of the time, and then the peak point (moment at which the inclination is made to be zero) is obtained by a zero-cross detection circuit 409.

On the other hand, an output signal from the addition circuit 407 is also supplied to a comparator 4010. The comparator 4010 opens a gate circuit 4011 when the output from the addition circuit 407 exceeds a predetermined value. The gate circuit 4011 determines the peak point output from the zero-cross detection circuit 409 as the symbol timing when the gate has been opened by the comparator 4010 so as to output a symbol timing signal.

In order to prevent fluctuation of the symbol timing signal caused from noise or the like generated in the first and second correlation vectors, a flywheel circuit may effectively be employed to protect the symbol timing signal.

Since the symbol timing determination circuit 40 is required to simply obtain the time at which the magnitudes of the first and second correlation vectors are made to be the largest, the square circuits 401 to 404 may be replaced by circuits for obtaining, for example, the absolute value. As an alternative to this, only either of the first correlation vector or the second correlation vector obtains the symbol timing.

Referring to FIG. 6, the Fourier transforming circuit 32 extracts the sampled OFDM signal in the effective symbol period in response to the symbol timing signal supplied from the symbol timing determination circuit 40 to Fourier-transform the time domain to the frequency domain so as to obtain the modulation vector of each sub-carrier.

Since the OFDM demodulation apparatus having the foregoing structure obtains the frequency errors of the local carrier-wave signal and the sampling clock from the sampled OFDM signal, which has not been Fourier-transformed, the OFDM demodulation apparatus is able to accurately estimate the frequency errors of the local carrier-wave signal and the sampling clock even if the frequencies of the local carrier-wave signal and the sampling clock are shifted.

As a result, the frequency of the local carrier-wave signal and that of the sampling clock can accurately be synchronized at high speed and free from influence of noise. As a result, errors of the local carrier-wave signal and the sampling frequency can reliably be removed. Thus, a correct demodulation vector can be obtained by the Fourier transforming circuit 32.

Referring to FIGS. 18 to 22, a second embodiment of the present invention will now be described.

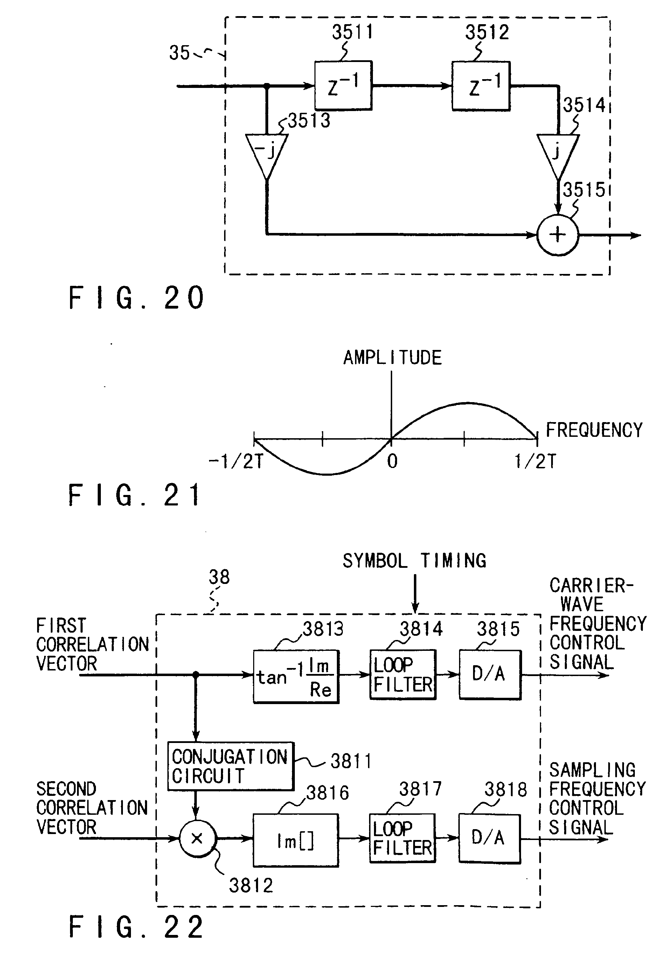

This embodiment, having the same overall structure as that according to the first embodiment shown in FIG. 6, is characterized by the structures of the first filter circuit 34, the second filter circuit 35 and the frequency control circuit 38. Therefore, the overall structure are omitted from description and illustration. FIGS. 18, 20 and 22 respectively show the foregoing units to describe characterized portions. FIGS. 19 and 21 show frequency-amplitude characteristic of each of the first and second filter circuits 34 and 35 according to this embodiment. In the first filter circuit 34 shown in FIG. 18, a delay circuit ($Z^{-1}$) 3411 delays a sampled OFDM signal supplied to the first filter circuit 34 by one sampling clock to output the same to a coefficient circuit 3412. The coefficient circuit 3412 multiplies, by one, the sampled OFDM signal, delayed by one sampling clock. An output from the coefficient circuit 3412 is made to be an output from the first filter circuit 34.

The first filter circuit 34 having the foregoing structure, as shown in FIG. 19, has a passing characteristic which is, in the frequency domain, even symmetric with respect to the central frequency of the base band frequency. The first filter circuit 34 conducts group delay. Note that the coefficient circuit 3412 can be omitted from the structure, as passing through a signal.

In the second filter circuit 35 shown in FIG. 20, the delay circuits ($Z^{-1}$) 3511 and 3512 sequentially delay the sampled OFDM signal supplied to the second filter circuit 35 by one sampling click. The coefficient circuit 3513 multiplies the sampled OFDM signal supplied to the second filter circuit 35 by - j. The coefficient circuit 3514 multiplies the sampled OFDM signal, delayed by the delay circuits 3511 and 3512 by two sampling clocks, by j. The output from the coefficient circuit 3513 and that from the coefficient circuit 3514 are added to each other by an addition circuit 3515 so as to be an output from the second filter circuit 35.

The second filter circuit 35 having the foregoing structure, as shown in FIG. 21, has a passing characteristic which is, in the frequency domain, odd symmetric with respect to the central frequency in the base band frequency. Moreover, the second filter circuit 35 permits a group delay time of one sampling clock. The coefficient circuit 3513 can easily be realized by forming its structure such that the real part and the imaginary part of the sampled OFDM signal are switched and then the polarity of the imaginary part is inverted. The coefficient circuit 3514 can easily be realized by forming its structure such that the real part and the imaginary part of the sampled OFDM signal are switched and then the polarity of the real part is inverted.

The number of clocks of the sampled OFDM signal delayed by the delay circuit 33 shown in FIG. 6 is, as described above, the number of clocks corresponding to the time obtained by subtracting the group delay time periods of the first and second filter circuits 34 and 35 from the effective symbol period. If the first and second filter circuits 34 and 35 have the structures as shown in FIGS. 18 and 20, the number of the clocks delayed by the delay circuit 33 may be the number which is by one clock, smaller than the number of clocks corresponding to the effective symbol period because the group delay time of each of the first and second filter circuits 34 and 35 is one clock.

The first and second correlation vectors obtainable by the first and second correlation circuits 36 and 37 when an error is made in the frequency of the local carrier-wave signal and the sampling clock will now be described.

As described above, Equation (7) expresses, with the signal component of the sub-carrier k, the correlation vector obtainable from the output from the first and second correlation circuits 36 and 37. Therefore, a considerable computation will be performed about two sub-carriers k1 and k2 of frequencies wk1 = w and wk2 = -ω.

Since the first filter circuit 34 has the even symmetrical passing characteristic, an output from the first filter circuit 34 is in the form obtained by adding the signal component of the sub-carrier k2 to the signal component of the sub-carrier k1. Therefore, first correlation vector C1 output from the first correlation circuit 36 is made to be the same of correlation vectors as expressed by Equation (9)

$$C_1 = C_{k1}(T_s + \Delta T) + C_{k2}(T_s + \Delta T)$$
$$\cong |d|^2 T_g (e^{j(\Delta \omega T_s + \omega \Delta T)} + e^{j(\Delta \omega T_s - \omega \Delta T)})$$
$$\cong |d|^2 T_g \cdot 2 \cos(\omega \Delta T) e^{j\Delta \omega T_s} \qquad \ldots (9)$$

Since the second filter circuit 35 has the odd symmetrical passing characteristic, the output from the second filter circuit 35 is in the form obtained by subtracting the signal component of the sub-carrier k2 from the signal component of the sub-carrier k1. Therefore, second correlation vector C2 output from the second correlation circuit 37 is made to be the difference between the correlation vectors as expressed by Equation (10).

$$C_2 = C_{k1}(T_s + \Delta T) - C_{k2}(T_s + \Delta T)$$
$$\cong |d|^2 T_g (e^{j(\Delta \omega T_s + \omega \Delta T)} - e^{j(\Delta \omega T_s - \omega \Delta T)})$$
$$\cong |d|^2 T_g \cdot 2j \sin(\omega \Delta T) e^{j\Delta \omega T_s} \qquad \ldots (10)$$

If the first and second filter circuits 34 and 35 are structured as described above, the frequency control circuit 38 may be structured, for examples, as shown in FIG. 22.

Referring to FIG. 22, the first correlation vector obtained from the first correlation circuit 36 is supplied to a phase-angle calculation circuit (tan$^{-1}$ (Im/Re)) 3813. The phase-angle calculation circuit 3813 obtains the phase angle of the first correlation vector. As can be understood from Equation (9), the phase angle of the first correlation vector C1 is made to be ΔωTs. Therefore, the output from the phase-angle calculation circuit 3813 is made to be a value in accordance with the frequency error Δω of the local carrier-wave signal. The frequency error signal of the local carrier-wave signal is supplied to the loop filter 3814.

The loop filter 3814 determines the response of the carrier-wave frequency control loop by amplifying or damping and smoothing the carrier-wave frequency error signal of the local carrier-wave signal. The output from the loop filter 3814 is supplied to the D/A conversion circuit 3815. The D/A conversion circuit 3815converts the numerical output from he loop filter 3814 into analog voltage. The output from the D/A conversion circuit 3815 is, as the carrier-wave frequency control signal, supplied to the local oscillation circuit 314 in the quadrature detection circuit 31.

The order of the loop filter 3814 and the D/A conversion circuit 3815 may be switched. If the local oscillation circuit 314 is a numerical controlled circuit, the D/A conversion circuit 3815 is omitted.

The first correlation vector is also supplied to the conjugation circuit 3811. The conjugation circuit 3811 obtains the complex conjugation of the first correlation vector, the output from the conjugation circuit 3811 being supplied to a multiplier circuit 3812.

The multiplier circuit 3812 multiplies a conjugation vector of the first correlation vector obtained by the conjugation circuit 3811 and the second correlation vector supplied from the second correlation circuit 37. A result of the multiplication is supplied to an imaginary-part selection circuit (IM[]) 3816. The imaginary-part selection circuit 3816 selectively deduces the imaginary part from the input signal and outputs a value in accordance with the error $\Delta T$ in the effective symbol period as expressed by Equation (11). The obtained imaginary part selection signal is supplied to a loop filter 3817.

$$
\begin{aligned}
\mathrm{Im}[C_1{}^* C_2] &= \mathrm{Im}[|d|^4 T_g{}^2 \cdot 4j \cos(\omega\Delta T) \sin(\omega\Delta T)] \\
&= |d|^4 T_g{}^2 \cdot 2\sin(2\omega\Delta T)
\end{aligned}
\qquad \ldots \ (11)
$$

The loop filter 3817 determines the response of the sampling clock control loop by amplifying or damping and smoothing the frequency error signal of the sampling clock. The output from the loop filter 3817 is supplied to a D/A conversion circuit 3818. The D/A conversion circuit 3818 converts the numerical output from the loop filter 3817 into analog voltage. The output from the D/A conversion circuit 3818 is, as a sampling frequency control signal, supplied to the clock generating circuit 39.

The clock generating circuit 39 raises the sampling frequency when the error $\Delta T$ in the effective symbol period is positive in response to the sampling frequency control signal. When the error $\Delta T$ is negative, the clock generating circuit 39 lowers the sampling frequency.

In the frequency control circuit 38, the order of the loop filter 3817 and the D/A conversion circuit 3818 may be switched. If the oscillator in the clock generating circuit 39 is a numerical controlled oscillator, the D/A conversion circuit 3818 is omitted.

It is preferable that the operation, which is performed by the frequency control circuit 38, be performed at the moment at which the magnitudes of the first and second correlation vectors are made to be the maximum as described above in order to improve the noise resistance. Therefore, the frequency control circuit 38 receives, from the symbol timing determination circuit 40, the symbol timing signal at the moment which is determined that the first and second correlation vectors are the maximum to perform the operation.

As can be understood from the foregoing description, also the OFDM demodulation apparatus having the foregoing structure obtains the frequency errors of the local carrier-wave signal and the sampling clock from the sampled OFDM signal which has not been Fourier-transformed. Therefore, the OFDM demodulation apparatus attains an effect similar to that obtainable from the OFDM demodulation apparatus according to the first embodiment.

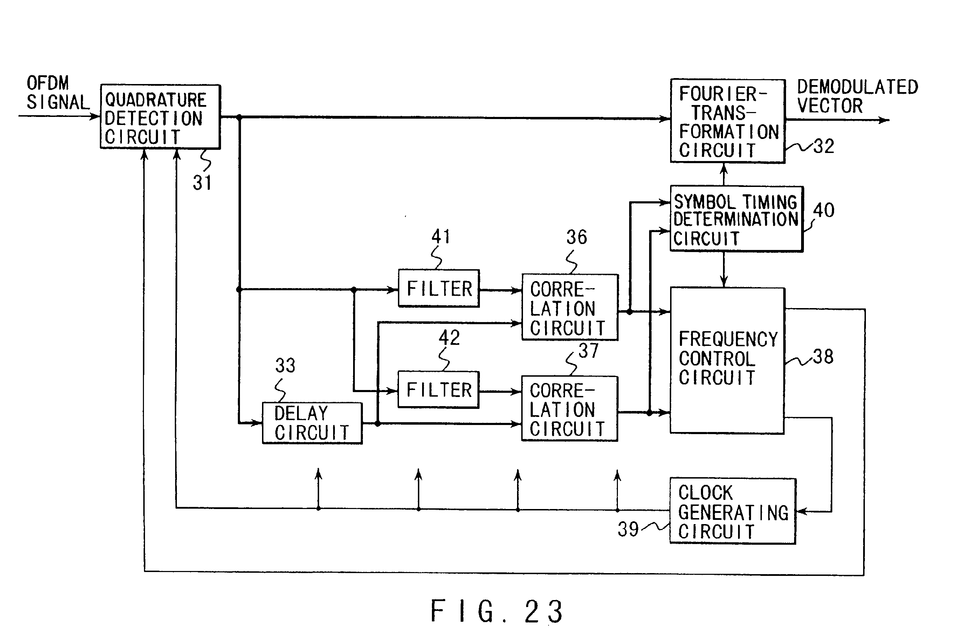

FIG. 23 is a block diagram showing the structure of an OFDM demodulation apparatus according to a third embodiment of the present invention.

The OFDM demodulation apparatus according to this embodiment is different from the structure of the OFDM demodulation apparatuses according to the first and second embodiments in the connecting position of the filter circuit. That is, the first and second embodiment have the structure such that the first and second filter circuits 34 and 35 are connected between the delay circuit 33 and the first and second correlation circuits 36 and 37. On the other hand, this embodiment has a structure such that filter circuits 41 and 42 are connected between the quadrature detection circuit 31 and the first and second correlation circuits 36 and 37, as shown in FIG. 23.

The filter circuit 41 has the same structure as that of the first filter circuit 34, as shown in FIG. 9 or FIG. 18 and has a characteristic as shown in FIG. 10 or FIG. 19. The filter circuit 42 has the same structure as that of the second filter circuit 35 as shown in FIG. 11 or FIG. 20 and has a characteristic as shown in FIG. 12 or FIG. 21.

If the structure is formed as described above, the difference in the position of the connected filter circuit arises the following necessity: the delay time realized by the delay circuit 33 according to the first and second embodiment, which is the time obtained by subtracting the group delay time periods of the first and second filter circuits 34 and 35 from the length of the effective symbol period. On the other hand, the delay time realized by the delay circuit 33 according to this embodiment must be time obtained by adding the group delay time periods of the filter circuits 41 and 42 to the length of the effective symbol period.

Since the other structures are the same as those of the first and second embodiments, the elements shown in FIG. 23 having the same structures as those shown in FIG. 6 are given the same reference numerals and the same elements are omitted from description. Since the operation of this embodiment is performed on the basis of the same principle as that of the OFDM demodulation apparatus according to the first embodiment, also the description of the operation is omitted.

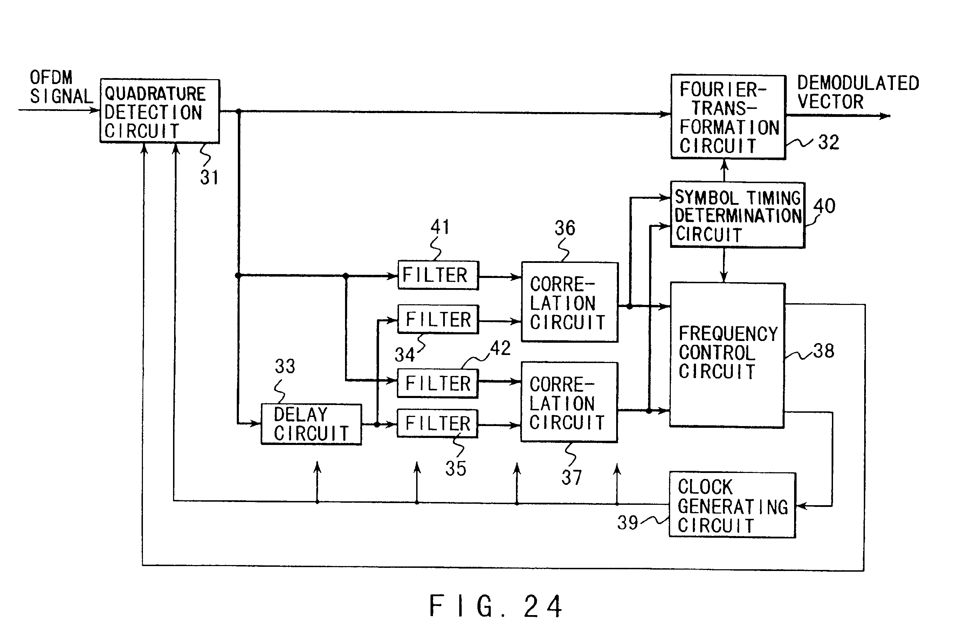

FIG. 24 is a block diagram showing the structure of an OFDM demodulation apparatus according to a fourth embodiment of the present invention.

The OFDM demodulation apparatus according to this embodiment has a structure formed by combining the structures according to the first embodiment and the third embodiment. The first and second filter circuits 34 and 35 shown in FIG. 6 and the filter circuits 41 and 42 shown in FIG. 23 are simultaneously employed. The filter circuits 34 and 41 have the structures shown in FIG. 9 or FIG. 18 and have the characteristics shown in FIG. 10 or FIG. 19. Similarly, the filter circuits 35 and 42 have the structures shown in FIG. 11 or FIG. 20 and have characteristics shown in FIG. 12 or FIG. 21.

If the structure is formed as described above, the group delay time periods of the filter circuits 34, 35, 41 and 42 are the same, and the delay time realized by the delay circuit 33 may be time corresponding to the length of the effective symbol period.

Since the other structures are the same as those according to the first and second embodiments, the elements shown in FIG. 24 which are the same as shown in FIG. 6 are given the same reference numerals and the same elements are omitted from description. Also the operation of this embodiment is performed on the basis of the same principle for the OFDM demodulation apparatus according to the first embodiment. Therefore, also the operation is omitted from description.

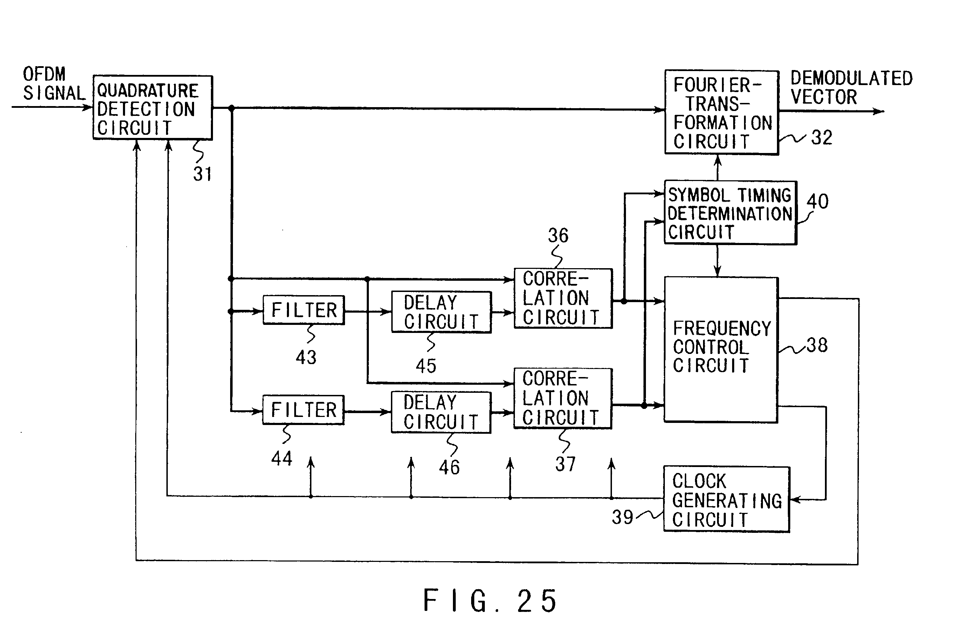

FIG. 25 is a block diagram showing the structure of an OFDM demodulation apparatus according to a fifth embodiment of the present invention.

The OFDM demodulation apparatus according to this embodiment has a structure such that the sampled OFDM signal output from the quadrature detection circuit 31 is supplied to the filter circuits 43 and 44 having different frequency-amplitude characteristics. Moreover, the delay circuits 45 and 46 delay the time of the sampled OFDM signal by a degree corresponding to the length of the effective symbol period for delaying signals to the first and second correlation circuits 36 and 37. In addition, the sampled OFDM signal output from the quadrature detection circuit 31 is directly supplied to the first and second correlation circuits 36 and 37.

The filter circuits 43 and 44 have the structures shown in FIGS. 9 and 11 or FIGS. 18 and 20 and have characteristics shown in FIGS. 10 and 12 or FIGS. 19 and 21. In this case, the filter circuits 43 and 44 have the group delay characteristic of one sampling clock.

In this case, the delay circuits 45 and 46 are arranged to realize delay time periods each of which is obtained by subtracting one sampling clock from the length of the effective symbol period.

Since the other structures are the same a s those according to the first and second embodiments, the same elements shown in FIG. 25 as those shown in FIG. 6 are given the same reference numerals and the same elements are omitted from description. Since the OFDM demodulation apparatus according to this embodiment is operated on the basis of the same principle as that for the OFDM demodulation apparatus according to the first embodiment, also the operation is omitted from description.

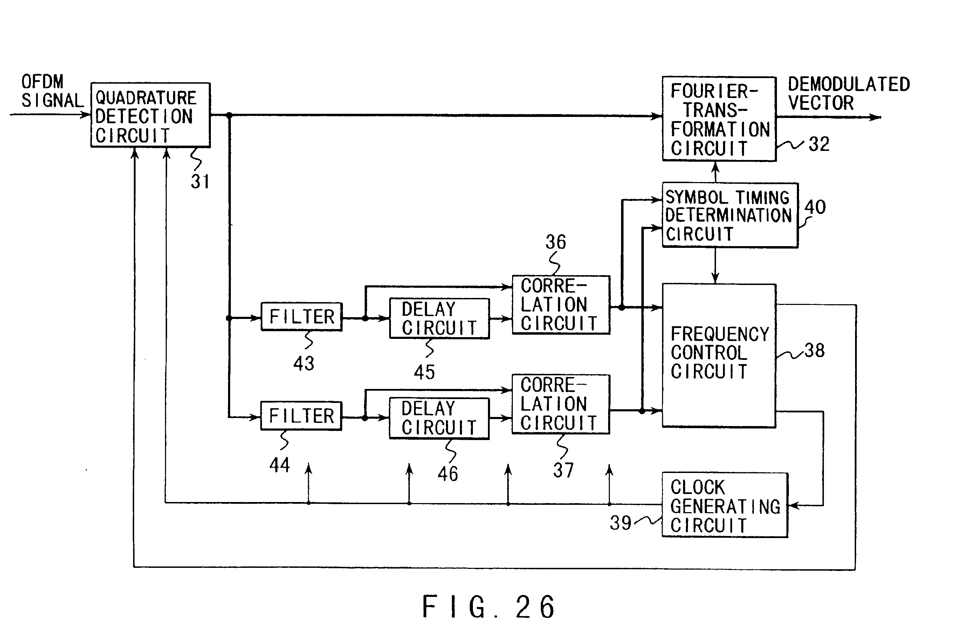

FIG. 26 is a block diagram showing an OFDM demodulation apparatus according to a sixth embodiment.

The OFDM demodulation apparatus according to this embodiment is structured to supply sampled OFDM signals output from the quadrature detection circuit 31 to the filter circuits 43 and 44 having different frequency-amplitude characteristics to then supply them to the first and second correlation circuits 36 and 37. On the other hand, the sampled OFDM signals outputted from the filter circuits 43 and 44 are delayed by the delay circuits 45 and 46 by the time corresponding to the length of the effective symbol period so as to be supplied to the first and second correlation circuits 36 and 37.

The filter circuits 43 and 44 have the structures shown in FIGS. 9 and 11 or FIG. 18 and FIG. 20 and have the characteristics shown in FIGS. 10 and 12 or FIGS. 19 and 21. In this case, the group delay time of each of the filter circuits 43 and 44 is not required to be considered the delay circuits 45 and 46 are required to have delay time periods corresponding to the length of the effective symbol period.

Since the other structures are the same as those according to the first and second embodiment, the same elements shown in FIG. 26 as the elements shown in FIG. 6 are given the same reference numerals and the same elements are omitted from description. Since the OFDM demodulation apparatus according to this embodiment is operated on the basis of the same principle of that of the OFDM demodulation apparatus according to the first embodiment, also the operation is omitted from description.

In the first to sixth embodiments, two types of examples of the structures of the filter circuits 34, 35, 41, 42, 43, and 44 have been described. The OFDM demodulation apparatus according to the present invention has the characteristic in that the signals obtained by separating the sampled OFDM signal by using the filter circuits having different characteristics are used to obtain two correlation vectors so that the carrier-wave frequency control signal and the sampling frequency control signal are obtained.

As described above, according to the present invention, even if the frequency of the local carrier-wave signal for quadrature detecting the OFDM signal and that of the sampling clock are shifted, the frequency between the local carrier-wave signal and the sampling clock can accurately be estimated. As a result, the OFDM demodulation apparatus can be provided which is capable of synchronizing the frequencies of the local carrier-wave signal and the sampling clock, at high speed, and free from influence of noise.

**Claims**

1. An Orthogonal Frequency Division Multiplex, hereinafter referred to as OFDM, demodulation apparatus for converting a received OFDM signal, one symbol of which is composed of a guard period and an effective symbol period and in which a portion of a signal in the effective symbol period is copied to the guard period in order to realize periodicity in the symbol, into an OFDM signal in the base band in response to a local carrier-wave signal generated by local oscillation means (314); generating, from the OFDM signal in the base band a sampled OFDM signal in response to a sampling clock signal generated by sampling clock generating means (39); and demodulating the sampled OFDM signal in the effective symbol period, said OFDM demodulation apparatus comprising:

   correlation vector acquiring means (33 to 37) comprise a delay circuit (33, (45, 46)) and a correlation circuit (36, 37) to acquire correlation vectors between a signal in the guard period an a signal in the corresponding effective symbol period, whereby either the sampled OFDM signal is correlated directly with either the sampled OFDM signal delayed by the delay circuit (33, (45, 46)) then filtered by filter means (34, 35), or the sampled OFDM signal filtered by filter means (34, 35) then delayed by the delay circuit (33,(45, 46));
   or the sampled OFDM signal is correlated after being filtered by filter means (41, 42, 43, 44) with either the sampled OFDM signal delayed by the delay circuit (33, (45, 46)) then filtered by filter means (34, 35),
   or the sampled OFDM signal filtered by filter means (34, 35) then delayed by the delay circuit (33, (45, 46)), or the delayed sampled OFDM signal,
   frequency control means (38), consisting of

      - an addition circuit (383) adding the phase angle of a first correlation vector obtained by a phase angle calculation circuit (381) to the phase angle of a second correlation vector obtained by a second phase angle calculation circuit (382)
      - and a substraction circuit (386) substracting the phase angle of the second correlation vector from the phase angle of the first correlation vector, for obtaining a frequency error of each of the local carrier-wave signal and the sampling clock signal in accordance with the plurality of correlation vectors obtained by said correlation vector acquiring means (33 to 37),
      and generating a carrier-wave frequency control signal and a sampling frequency control signal to output the generated signals to said local oscillation means (314) and said sampling clock generating means (39);
      being **characterized in that**
      the correlation vector acquiring means (33 to 37) comprise first and second filter means (34, 35 (41, 42, 43, 44)),
      - either said first filter means (34) or said second filter means (35) has a filtering characteristic for mainly permitting a signal component in a frequency region higher than the central frequency of the OFDM signal to pass through, and the other filter means has a filtering characteristic for mainly permitting a signal component in a frequency region lower than the central frequency of the OFDM signal to pass through,
      - or either said first filter means (34) or said second filter means (35) has a passing characteristic which is even-symmetrical with respect to the central frequency of the OFDM signal and the other filter means has a passing characteristic which is odd-symmetrical with respect to the central frequency in the OFDM signal.

2. An OFDM demodulation apparatus according to claim 1, **characterized in that** said correlation vector acquiring means includes

   first and second filter means (34 and 35) for filtering the sampled OFDM signals with different filtering characteristics; delay means (33) disposed in front of said first and second filter means (34 and 35) and arranged to, in response to the sampling clock signal, delay the sampled OFDM signal by the number of clocks corresponding to the length of the effective symbol period determined in consideration of delay time periods of said first and second filter means (34 and 35);
first correlation means (36) for obtaining correlation between the sampled OFDM signal and an output signal from said first filter means (34) to obtain a first correlation vector; and second correlation means (37) for obtaining correlation between the sampled OFDM signal and an output signal from said second filter means (35) obtains frequency errors of the local carrier-wave signal and the sampling clock signal in accordance with the first correlation vector and the second correlation vector.

3. An OFDM demodulation apparatus according to claim 1, **characterized in that** said correlation vector acquiring means includes
first and second filter means (41 and 42) for filtering the sampled OFDM signals with different filtering characteristics;
delay means (33) for, in response to the sampling clock signal, delaying the sampled OFDM signal by the number of clocks corresponding to the length of the effective symbol period determined in consideration of delay time periods of said first and second filter means (41 and 42);
first correlation means (36) for obtaining correlation between an output signal from said first filter means (41) and an output signal from said delay means (33) to obtain a correlation vector; second correlation means (37) for obtaining correlation between an output
signal from said second filter means (42) and an output signal from said delay means (33) to obtain a second correlation vector, and said frequency control means (38) obtains frequency errors of the local carrier-wave signal and the sampling clock signal in accordance with the first correlation vector and the second correlation vector.

4. An OFDM demodulation apparatus according to claim 1, **characterized in that**
said correlation vector acquiring means includes
first and second filter means (41 and 42) for filtering the sampled OFDM signals with different filtering characteristics;
delay means (33) for delaying the sampled OFDM signal by the number of clocks corresponding to the length of the effective symbol period in response to the sampling clock signal;
third filter means (34) for filtering the sampled OFDM signal delayed by said delay means (33) with the same filtering characteristic as that of said first filter means (41);
fourth filter means (35) for filtering the sampled OFDM signal delayed by said delay means (33) with the same filtering characteristic as that of said second filter means (42);
first correlation means (36) for obtaining correlation between an output signal from said first filter means (41) and an output signal from said third filter means (34) to obtain first correlation vector; and
a second correlation means (37) for obtaining correlation between an output signal from said second filter means (42) and an output signal from said fourth filter means (35) to obtain second correlation vector, wherein
said frequency control means (38) obtains the frequency errors of the local carrier-wave signal and the sampling clock signal in accordance with the first correlation vector and the second correlation vector.

5. An OFDM demodulation apparatus according to claim 1, **characterized in that** said correlation vector acquiring means includes
first and second filter means (43 and 44) for filtering the sampled OFDM signal with different filtering characteristics;
first and second delay means (45 and 46) for respectively delaying output signals from said first and second filter means (43 and 44) by a number of clocks corresponding to the length of the effective symbol period determined in consideration of the delay time periods of said first and second filter means (43 and 44) in response to the sampling clock signal;
first correlation means (36) for obtaining correlation between the sampled OFDM signal and an output signal from said first delay means (45) to obtain first correlation vector; and
second correlation means (37) for obtaining correlation between the sampled OFDM signal and an output signal from said second delay means (46) to obtain second correlation vector, wherein
said frequency control means (38) obtains frequency errors of the local carrier-wave signal and the sampling clock signal in accordance with the first and second correlation vectors.

6. An OFDM demodulation apparatus according to claim 1, **characterized in that** said correlation vector acquiring means includes
first and second filter means (43 and 44) for filtering the sampled OFDM signal with different filtering characteristics;
first and second delay means (45 and 46) for respectively delaying output signals from said first and second filter means (43 and 44) by the number of clocks corresponding to the length of the effective symbol period in response to the sampling clock signal;
first correlation means (36) for obtaining correlation between an output signal from said first filter means (43) and an output signal from said first delay means (45) to obtain first correlation vector; and second correlation means (37) for obtaining correlation between an output signal from said second filter means (44) and an output signal from said second delay means (46) to obtain second correlation vector, wherein said frequency control means (38) obtains frequency errors of the local carrier-waves signal and the sampling clock signal in accordance with the first correlation vector and the second correlation vector.

7. An OFDM demodulation apparatus according to claim 1, **characterized in that** said sampling clock generating means (39) controls the frequency of the sampling clock signal in response to the sampling frequency control signal.

8. An OFDM demodulation apparatus according to claim 1, **characterized by** further comprising multiplying means (312 and 313) for multiplying the received OFDM signal by signals respectively output from said local oscillation means (314) to convert the frequency, and the frequency of the local carrier-wave output from said local oscillation means (314) is controlled in response to the carrier wave frequency control signal.

9. An OFDM demodulation apparatus according to claim 1, **characterized by** further comprising:

symbol timing determination means (40) for determining symbol timing indicating the boundary of each symbol in the sampled OFDM signal in accordance with at least any one of the plural correlation vectors; and
digital demodulation means (32) for determining and extracting the effective symbol in accordance with the symbol timing determined by said symbol timing determination means (40) to Fourier-transform the effective symbol to demodulate the received OFDM signal.

**Patentansprüche**

1. Orthogonal-Frequenzmultiplex, hierin nachstehend als OFDM-Demodulationsvorrichtung bezeichnet, zum Umwandeln eines empfangenen OFDM-Signals, dessen eines Symbol aus einer Schutzperiode und einer effektiven Symbolperiode besteht und in dem ein Teil eines Signals in der effektiven Symbolperiode in die Schutzperiode kopiert ist, um Periodizität im Symbol zu realisieren, in ein OFDM-Signal im Basisband als Reaktion auf ein lokales Trägerwellensignal, das durch lokale Oszillationsmittel (314) erzeugt ist; Erzeugen eines abgetasteten OFDM-Signals aus dem OFDM-Signal im Basisband als Reaktion auf ein Abtasttaktsignal, das durch das Abtasttaktgebererzeugungsmittel (39) erzeugt ist; und Demodulieren des abgetasteten OFDM-Signals in der effektiven Signalperiode, wobei die OFDM-Demodulationsvorrichtung folgendes umfaßt:

Korrelationsvektorerfassungsmittel (33 bis 37), die eine Verzögerungsschaltung (33, (45, 46)) und eine Korrelationsschaltung (36, 37) umfassen, um Korrelationsvektoren zwischen einem Signal in der Schutzperiode und einem Signal in der entsprechenden effektiven Symbolperiode zu erfassen, wobei entweder das abgetastete OFDM-Signal direkt mit dem abgetasteten OFDM-Signal, das durch die Verzögerungsschaltung (33, (45, 46)) verzögert ist, dann durch das Filtermittel (34, 35) gefiltert ist, oder mit dem abgetasteten OFDM-Signal, das durch das Filtermittel (34, 35) gefiltert ist, dann durch die Verzögerungsschaltung (33, (45, 46)) verzögert ist, korreliert ist;
oder das abgetastete OFDM-Signal, nachdem es durch Filtermittel (41, 42, 43, 44) gefiltert ist, entweder mit dem abgetasteten OFDM-Signal, das durch die Verzögerungsschaltung (33, (45, 46)) verzögert ist, dann durch das Filtermittel (34, 35) gefiltert ist, oder mit dem abgetasteten OFDM-Signal, das durch das Filtermittel (34, 35) gefiltert ist, dann durch die Verzögerungsschaltung (33, (45, 46)) verzögert ist, oder dem verzögerten abgetasteten OFDM-Signal korreliert ist,
Frequenzkontrollmitte (38), bestehend aus

- einer Additionsschaltung (383), die den Phasenwinkel eines ersten Korrelationsvektors, der durch eine Phasenwinkelberechnungsschaltung (381) erhalten ist, zum Phasenwinkel eines zweiten Korrelationsvektors addiert, der durch eine zweite Phasenwinkelberechnungsschaltung (382) erhalten ist
- und eine Subtraktionsschaltung (386), die den Phasenwinkel des zweiten Korrelationsvektors vom Phasenwinkel des ersten Korrelationsvektors subtrahiert, um einen Frequenzfehler sowohl für das lokale Trägerwellensignal und wie auch das Abtasttaktsignal entsprechend den mehreren Korrelationsvektoren zu erhalten, die durch das Korrelationsvektorerfassungsmittel (33 bis 37) erhalten sind,
und Erzeugen eines Trägerwellenfrequenzkontrollsignals und eines Abtastfrequenzkontrollsignals, um die erzeugten Signale an das lokale Oszillationsmittel (314) und das Abtasttakterzeugungsmittel (39) auszugeben;

**dadurch gekennzeichnet, daß**

die Korrelationsvektorerfassungsmittel (33 bis 37) erste und zweite Filtermittel (34, 35 (41, 42, 43, 44)) umfassen,

- entweder das erste Filtermittel (34) oder das zweite Filtermittel (35) eine Filtercharakteristik hat, um hauptsächlich eine Signalkomponente in einem Frequenzbereich durchzulassen, der höher als die Mittelfrequenz des OFDM-Signals ist, und das andere Filtermittel eine Filtercharakteristik hat, um hauptsächlich eine Signalkomponente in einem Frequenzbereich durchzulassen, der niedriger als die Mittelfrequenz des OFDM-Signals ist,
- oder entweder das erste Filtermittel (34) oder das zweite Filtermittel (35) eine Durchlaßcharakteristik hat, die gerade-symmetrisch in Bezug auf die Mittelfrequenz des OFDM-Signals ist, und das andere Filtermittel eine Durchlaßcharakteristik hat, die ungerade-symmetrisch in Bezug auf die Mittelfrequenz des OFDM-Signals ist.

2. OFDM-Demodulationsvorrichtung nach Anspruch 1, **dadurch gekennzeichnet, daß** das Korrelationsvektorerfassungsmittel folgendes umfaßt:

erste und zweite Filtermittel (34 und 35) zum Filtern der abgetasteten OFDM-Signale mit unterschiedlichen Filtercharakteristiken;
Verzögerungsmittel (33), das vor dem ersten und zweiten Filtermittel (34 und 35) angeordnet ist und dafür ausgelegt ist, als Reaktion auf das Abtasttaktsignal das abgetastete OFDM-Signal um die Zahl von Takten zu verzögern, die der Länge der effektiven Symbolperiode entspricht, welche unter Berücksichtigung der Verzögerungszeitperioden des ersten und zweiten Filtermittels (34 und 35) bestimmt ist;
erstes Korrelationsmittel (36) zum Gewinnen der Korrelation zwischen dem abgetasteten OFDM-Signal und einem Ausgangssignal vom ersten Filtermittel (34), um einen ersten Korrelationsvektor zu erhalten; und ein zweites Korrelationsmittel (37) zum Gewinnen einer Korrelation zwischen dem abgetasteten OFDM-Signal und einem Ausgangssignal vom zweiten Filtermittel (35), gewinnt Frequenzfehler des lokalen Trägerwellensignals und des Abtasttaktsignals entsprechend dem ersten Korrelationsvektor und dem zweiten Korrelationsvektor.

3. OFDM-Demodulationsvorrichtung nach Anspruch 1, **dadurch gekennzeichnet, daß** das Korrelationsvektorerfassungsmittel folgendes umfaßt:

erste und zweite Filtermittel (41 und 42) zum Filtern der abgetasteten OFDM-Signale mit unterschiedlichen Filtercharakteristiken;
Verzögerungsmittel (33), um als Reaktion auf das Abtasttaktsignal das abgetastete OFDM-Signal um die Zahl von Takten zu verzögern, die der Länge der effektiven Symbolperiode entspricht, welche unter Berücksichtigung der Verzögerungszeitperioden des ersten und zweiten Filtermittels (41 und 42) bestimmt ist;
erstes Korrelationsmittel (36) zum Gewinnen einer Korrelation zwischen einem Ausgangssignal vom ersten Filtermittel (41) und einem Ausgangssignal vom Verzögerungsmittel (33), um einen Korrelationsvektor zu erhalten; zweites Korrelationsmittel (37) zum Gewinnen einer Korrelation zwischen einem Ausgangssignal vom zweiten Filtermittel (42) und einem Ausgangssignal vom Verzögerungsmittel (33), um einen zweiten Korrelationsvektor zu erhalten, und das Frequenzkontrollmittel (38) erhält Frequenzfehler des lokalen Trägerwellensignals und des Abtasttaktsignals entsprechend dem ersten Korrelationsvektor und dem zweiten Korrelationsvektor.

4. OFDM-Demodulationsvorrichtung nach Anspruch 1, **dadurch gekennzeichnet, daß**:

das Korrelationsvektorerfassungsmittel folgendes umfaßt
erste und zweite Filtermittel (41 und 42) zum Filtern der abgetasteten OFDM-Signale mit unterschiedlichen Filtercharakteristiken;
Verzögerungsmittel (33) zum Verzögern des abgetasteten OFDM-Signals um die Zahl von Takten, die der Länge der effektiven Symbolperiode entspricht, als Reaktion auf das Abtasttaktsignal;
drittes Filtermittel (34) zum Filtern des abgetasteten OFDM-Signals, das durch das Verzögerungsmittel (33) mit derselben Filtercharakteristik wie der des ersten Filtermittels (41) verzögert ist;
viertes Filtermittel (35) zum Filtern des abgetasteten OFDM-Signals, das durch das Verzögerungsmittel (33) verzögert ist, mit derselben Filtercharakteristik wie der des zweiten Filtermittels (42);
erstes Korrelationsmittel (36) zum Gewinnen einer Korrelation zwischen einem Ausgangssignal vom ersten Filtermittel (41) und einem Ausgangssignal vom dritten Filtermittel (34), um den ersten Korrelationsvektor zu erhalten; und
ein zweites Korrelationsmittel (37) zum Gewinnen der Korrelation zwischen einem Ausgangssignal vom zweiten Filtermittel (42) und einem Ausgangssignal vom vierten Filtermittel (35), um einen zweiten Korrelationsvektor zu erhalten, wobei

das Frequenzkontrollmittel (38) die Frequenzfehler des lokalen Trägerwellensignals und des Abtasttaktsignals entsprechend dem ersten Korrelationsvektor und dem zweiten Korrelationsvektor erhält.

5. OFDM-Demodulationsvorrichtung nach Anspruch 1, **dadurch gekennzeichnet, daß** das Korrelationsvektorerfassungsmittel folgendes umfaßt:

erste und zweite Filtermittel (43 und 44) zum Filtern des abgetasteten OFDM-Signals mit unterschiedlichen Filtercharakteristiken;
erste und zweite Verzögerungsmittel (45 und 46), um die abgetasteten Ausgangssignale vom ersten bzw. zweiten Filtermittel (43 und 44) um die Zahl von Takten zu verzögern, die der Länge der effektiven Symbolperiode entspricht, welche unter Berücksichtigung der Verzögerungszeitperioden des ersten und zweiten Filtermittels (43 und 44) als Reaktion auf das Abtasttaktsignal bestimmt ist;
erstes Korrelationsmittel (36) zum Gewinnen einer Korrelation zwischen dem abgetasteten OFDM-Signal und einem Ausgangssignal vom ersten Verzögerungsmittel (45), um den ersten Korrelationsvektor zu erhalten; und zweites Korrelationsmittel (37) zum Gewinnen einer Korrelation zwischen dem abgetasteten OFDM-Signal und einem Ausgangssignal vom zweiten Verzögerungsmittel (46), um den zweiten Korrelationsvektor zu erhalten, wobei
das Frequenzkontrollmittel (38) Frequenzfehler des lokalen Trägerwellensignals und des Abtasttaktsignals entsprechend dem ersten und zweiten Korrelationsvektor erhält.

6. OFDM-Demodulationsvorrichtung nach Anspruch 1, **dadurch gekennzeichnet, daß** das Korrelationsvektorerfassungsmittel folgendes umfaßt:

erste und zweite Filtermittel (43 und 44) zum Filtern des abgetasteten OFDM-Signals mit unterschiedlichen Filtercharakteristiken;
erste und zweite Verzögerungsmittel (45 und 46), um als Reaktion auf das Abtasttaktsignal die Ausgangssignale vom ersten bzw. zweiten Filtermittel (43 und 44) um die Zahl von Takten zu verzögern, die der Länge der effektiven Symbolperiode entspricht;
erstes Korrelationsmittel (36) zum Gewinnen einer Korrelation zwischen einem Ausgangssignal vom ersten Filtermittel (43) und einem Ausgangssignal vom ersten Verzögerungsmittel (45), um einen ersten Korrelationsvektor zu erhalten; und zweites Korrelationsmittel (37) zum Gewinnen einer Korrelation zwischen einem Ausgangssignal vom zweiten Filtermittel (44) und einem Ausgangssignal vom zweiten Verzögerungsmittel (46), um einen zweiten Korrelationsvektor zu erhalten, wobei das Frequenzkontrollmittel (38) Frequenzfehler des lokalen Trägerwellensignals und des Abtasttaktsignals entsprechend dem ersten Korrelationsvektor und dem zweiten Korrelationsvektor erhält.

7. OFDM-Demodulationsvorrichtung nach Anspruch 1, **dadurch gekennzeichnet, daß** das Abtasttakterzeugungsmittel (39) die Frequenz des Abtasttaktsignals als Reaktion auf das Abtastfrequenzkontrollsignal steuert.

8. OFDM-Demodulationsvorrichtung nach Anspruch 1, **dadurch gekennzeichnet, daß** sie ferner Multiplikationsmittel (312 und 313) zum Multiplizieren des empfangenen OFDM-Signals mit Signalen umfaßt, die jeweils von lokalen Oszillationsmitteln (314) ausgegeben sind, um die Frequenz umzuwandeln, und die Frequenz der lokalen Trägerwellenausgabe vom lokalen Oszillationsmittel (314) als Reaktion auf das Trägerwellenfrequenzkontrollsignal gesteuert ist.

9. OFDM-Demodulationsvorrichtung nach Anspruch 1, **dadurch gekennzeichnet, daß** sie ferner folgendes umfaßt:

Symbolzeitablaufsbestimmungsmittel (40) zum Bestimmen des Symbolzeitablaufs, der die Grenze jedes Symbols im abgetasteten OFDM-Signal in Übereinstimmung mit mindestens einem der mehreren Korrelationsvektoren anzeigt; und digitales Demodulationsmittel (32) zum Bestimmen und Extrahieren des effektiven Symbols in Übereinstimmung mit dem Symbolzeitablauf, der durch das Symbolzeitablaufsbestimmungsmittel (40) bestimmt ist, um das effektive Symbol einer Fourier-Transformation zu unterziehen, um das empfangene OFDM-Signal zu demodulieren.

# EP 0 798 903 B1

**Revendications**

1. Appareil de démodulation par modulation par répartition en fréquences orthogonales, ci-après dénommé OFDM, permettant de convertir un signal OFDM reçu, dont un symbole se compose d'une période de garde et d'une période de symbole effective, et dans lequel une partie d'un signal se trouvant dans la période de symbole effective est copiée vers la période de garde, afin de produire une périodicité dans le symbole, sous forme d'un signal OFDM dans la bande de base en réponse à un signal local d'onde porteuse produit par des moyens locaux d'oscillation (314) ; permettant de produire, à partir du signal OFDM dans la bande de base, un signal OFDM échantillonné en réponse à un signal d'horloge d'échantillonnage produit par des moyens de production d'horloge d'échantillonnage (39) ; et permettant de démoduler le signal OFDM échantillonné au cours de la période de symbole effective, ledit appareil de démodulation par OFDM comprenant :

   des moyens d'acquisition de vecteurs de corrélation (33 à 37) comprenant un circuit retard (33, (45, 46)) et un circuit de corrélation (36, 37) afin d'acquérir des vecteurs de corrélation entre un signal lors de la période de garde et un signal dans la période de symbole effective correspondante, moyennant quoi soit le signal OFDM échantillonné est corrélé directement avec soit le signal OFDM échantillonné retardé par le circuit retard (33, (45, 46)) puis filtré par des moyens de filtrage (34, 35), soit le signal OFDM échantillonné est filtré par des moyens de filtrage (34, 35) puis retardé par le circuit retard (33, (45, 46)) ;
   ou bien le signal OFDM échantillonné est corrélé après avoir été filtré par des moyens de filtrage (41, 42, 43, 44) soit alors que le signal OFDM échantillonné est retardé par le circuit retard (33, (45, 46)) puis filtré par des moyens de filtrage (34, 35), soit alors que le signal OFDM échantillonné est filtré par des moyens de filtrage (34, 35) puis retardé par le circuit retard (33, (45, 46)) ou par le signal OFDM échantillonné et retardé,
   des moyens de régulation de fréquence (38), comportant :

      - un circuit d'addition (383) qui ajoute l'angle de phase d'un premier vecteur de corrélation obtenu par un circuit de calcul d'angle de phase (381) à l'angle de phase d'un deuxième vecteur de corrélation obtenu par un deuxième circuit de calcul d'angle de phase (382)
      - et un circuit de soustraction (386) qui soustrait l'angle de phase du deuxième vecteur de corrélation de l'angle de phase du premier vecteur de corrélation, afin d'obtenir une erreur en fréquence de chaque signal local à onde porteuse et signal d'horloge d'échantillonnage, selon la pluralité de vecteurs de corrélation obtenus par le biais desdits moyens d'acquisition de vecteurs de corrélation (33 à 37),

   et permettant de produire un signal de régulation de fréquence à onde porteuse et un signal de régulation de fréquence d'échantillonnage afin d'émettre les signaux produits jusqu'auxdits moyens d'oscillation locale (314) et auxdits moyens (39) de production d'horloge d'échantillonnage ;
   qui se **caractérise en ce que**
   les moyens d'acquisition de vecteurs de corrélation (33 à 37) comprennent des premiers et des deuxièmes moyens de filtrage (34, 35 (41, 42, 43, 44)),

      - soit lesdits premiers moyens de filtrage (34) soit lesdits deuxièmes moyens de filtrage (35) comprennent une caractéristique de filtrage afin de permettre principalement à une composante de signal située dans une gamme de fréquences supérieure à la fréquence centrale du signal OFDM de transiter, et les autres moyens de filtrage comprennent une caractéristique de filtrage permettant principalement à une composante de signal située dans une gamme de fréquences inférieure à la fréquence centrale du signal OFDM de transiter,
      - soit lesdits premiers moyens de filtrage (34) ou lesdits deuxièmes moyens de filtrage (35) comprennent présente une caractéristique de passage qui présente une symétrie paire par rapport à la fréquence centrale du signal OFDM, tandis que les autres moyens de filtrage comprennent une caractéristique présentant une symétrie impaire par rapport à la fréquence centrale du signal OFDM.

2. Appareil de démodulation par OFDM selon la revendication 1, **caractérisé en ce que** lesdits moyens d'acquisition de vecteurs de corrélation comprennent
   des premiers et des deuxièmes moyens de filtrage (34 et 35) permettant de filtrer les signaux OFDM échantillonnés en fonction de différentes caractéristiques de filtrage ;
   les moyens de retard (33), disposés devant lesdits premiers et deuxième moyens de filtrage (34 et 35) et conçus pour qu'en réponse au signal d'horloge d'échantillonnage, il retarde le signal OFDM échantillonné du nombre d'horloges correspondant à la longueur de la période de symbole effective déterminée, compte-tenu de périodes de temps de retard desdits premier et deuxièmes moyens de filtrage (34 et 35) ;

des premiers moyens de corrélation (36) permettant d'obtenir une corrélation entre le signal OFDM échantillonné et un signal de sortie issu desdits premiers moyens de filtrage (34), afin d'obtenir un premier vecteur de corrélation ; et des deuxièmes moyens de corrélation (37) permettant d'obtenir une corrélation entre le signal OFDM échantillonné et un signal de sortie issu des deuxièmes moyens de filtrage (35), afin d'obtenir des erreurs en fréquence du signal local d'onde porteuse et du signal d'horloge d'échantillonnage en fonction du premier vecteur de corrélation et du deuxième vecteur de corrélation.

**3.** Appareil de démodulation par OFDM selon la revendication 1, **caractérisé en ce que** lesdits moyens d'acquisition de vecteurs de corrélation comprennent

des premiers et des deuxièmes moyens de filtrage (41 et 42) permettant de filtrer les signaux OFDM échantillonnés en fonction de différentes caractéristiques de filtrage ;

des moyens de retard (33), conçu pour qu'en réponse au signal d'horloge d'échantillonnage, il retarde le signal OFDM échantillonné du nombre d'horloges correspondant à la longueur de la période de symbole effective déterminée, compte-tenu des périodes de retard desdits premiers et deuxièmes moyens de filtrage (41 et 42) ;

des premiers moyens de corrélation (36) permettant d'obtenir une corrélation entre un signal de sortie issu desdits premiers moyens de filtrage (41) et un signal de sortie issu desdits premiers moyens de retard (33), afin d'obtenir un vecteur de corrélation ; des deuxièmes moyens de corrélation (37) permettant d'obtenir une corrélation entre un signal de sortie issu desdits deuxièmes moyens de filtrage (42) et un signal de sortie issu desdits moyens de retard (33), afin d'obtenir un deuxième vecteur de corrélation, et où desdits moyens de régulation de fréquence (38) donnent des erreurs en fréquence du signal local d'onde porteuse et du signal d'horloge d'échantillonnage en fonction du premier vecteur de corrélation et du deuxième vecteur de corrélation.

**4.** Appareil de démodulation par OFDM selon la revendication 1, **caractérisé en ce que** lesdits moyens d'acquisition de vecteurs de corrélation comprennent

des premiers et des deuxièmes moyens de filtrage (41 et 42) permettant de filtrer les signaux OFDM échantillonnés en fonction de différentes caractéristiques de filtrage ;

des moyens de retard (33), conçu pour retarder le signal OFDM échantillonné du nombre d'horloges correspondant à la longueur de la période de symbole effective, en réponse au signal d'horloge d'échantillonnage ;

des troisièmes moyens de filtrage (34) permettant de filtrer le signal OFDM échantillonné retardé par lesdits moyens de retard (33) selon la même caractéristique de filtrage que celle desdits premiers moyens de filtrage (41) ;

des quatrièmes moyens de filtrage (35) permettant de filtrer le signal OFDM échantillonné retardé par lesdits moyens de retard (33) selon la même caractéristique de filtrage que celle desdits deuxièmes moyens de filtrage (42) ;

des premiers moyens de corrélation (36) permettant d'obtenir une corrélation entre le signal de sortie issu desdits premiers moyens de filtrage (41) et un signal de sortie issu desdits troisièmes moyens de filtrage (34), afin d'obtenir un premier vecteur de corrélation ; et

des deuxièmes moyens de corrélation (37) permettant d'obtenir une corrélation entre un signal de sortie issu desdits deuxièmes moyens de filtrage (42) et un signal de sortie issu desdits quatrièmes moyens de filtrage (35), afin d'obtenir un deuxième vecteur de corrélation, et où

lesdits moyens de régulation de fréquence (38) donnent des erreurs en fréquence du signal local d'onde porteuse et du signal d'horloge d'échantillonnage en fonction du premier vecteur de corrélation et du deuxième vecteur de corrélation.

**5.** Appareil de démodulation par OFDM selon la revendication 1, **caractérisé en ce que** lesdits moyens d'acquisition de vecteurs de corrélation comprennent

des premiers et des deuxièmes moyens de filtrage (43 et 44) permettant de filtrer le signal OFDM échantillonné en fonction de différentes caractéristiques de filtrage ;

des premiers et deuxièmes moyens de retard (45 et 46), conçus pour retarder respectivement des signaux de sortie issus desdits premiers et deuxièmes moyens de filtrage (43 et 44) d'un nombre d'horloges correspondant à la longueur de la période de symbole effective déterminée compte tenu des périodes de temps de retard desdits premiers et deuxièmes moyens de filtrage (43 et 44), en réponse au signal d'horloge d'échantillonnage ;

des premiers moyens de corrélation (36) permettant d'obtenir une corrélation entre le signal OFDM échantillonné et un signal de sortie issu desdits premiers moyens de retard (45), afin d'obtenir un premier vecteur de corrélation ; et

des deuxièmes moyens de corrélation (37) permettant d'obtenir une corrélation entre le signal OFDM échantillonné et un signal de sortie issu dudit deuxième moyen de retard (46), afin d'obtenir un deuxième vecteur de corrélation, dans lequel

lesdits moyens de régulation de fréquence (38) donnent des erreurs en fréquence du signal local d'onde porteuse et du signal d'horloge d'échantillonnage en fonction des premier et deuxième vecteurs de corrélation.

**6.** Appareil de démodulation par OFDM selon la revendication 1, **caractérisé en ce que** lesdits moyens d'acquisition de vecteurs de corrélation comprennent

des premiers et des deuxièmes moyens de filtrage (43 et 44) permettant de filtrer le signal OFDM échantillonné en fonction de différentes caractéristiques de filtrage ;

des premiers et deuxièmes moyens de retard (45 et 46), conçus pour retarder respectivement des signaux de sortie issus desdits premiers et deuxièmes moyens de filtrage (43 et 44) du nombre d'horloges correspondant à la longueur de la période de symbole effective, en réponse au signal d'horloge d'échantillonnage ;

des premiers moyens de corrélation (36) permettant d'obtenir une corrélation entre un signal de sortie issu desdits premiers moyens de filtrage (43) et un signal de sortie issu desdits premiers moyens de retard (45), afin d'obtenir un premier vecteur de corrélation ; et des deuxièmes moyens de corrélation (37) permettant d'obtenir une corrélation entre un signal de sortie issu desdits deuxièmes moyens de filtrage (44) et un signal de sortie issu desdits deuxièmes moyens de retard (46), afin d'obtenir un deuxième vecteur de corrélation, dans lequel lesdits moyens de régulation de fréquence (38) donnent des erreurs en fréquence du signal local d'onde porteuse et du signal d'horloge d'échantillonnage en fonction du premier vecteur de corrélation et du deuxième vecteur de corrélation.

**7.** Appareil de démodulation par OFDM selon la revendication 1, **caractérisé en ce que** lesdits moyens de production d'horloge d'échantillonnage (39) régulent la fréquence du signal d'horloge d'échantillonnage en réponse au signal de régulation de fréquence d'échantillonnage.

**8.** Appareil de démodulation par OFDM selon la revendication 1, **caractérisé par** le fait de comprendre en outre des moyens multiplicateurs (312 et 313) permettant de multiplier les signaux OFDM reçus par des signaux respectivement émis à partir desdits moyens d'oscillation locale (314), en vue de convertir la fréquence, et où la fréquence de la sortie locale d'onde porteuse issue desdits moyens d'oscillation locale (314) est régulée en réponse au signal de régulation de fréquence d'onde porteuse.

**9.** Appareil de démodulation par OFDM selon la revendication 1, **caractérisé par** le fait de comprendre en outre :

des moyens de détermination de chronométrage de symbole (40), permettant de déterminer un minutage de symbole indiquant la limite de chaque symbole dans le signal OFDM échantillonné en fonction d'au moins un des plusieurs vecteurs de corrélation ; et des moyens de démodulation numérique (32) permettant de déterminer et d'extraire le symbole effectif en fonction du chronométrage de symbole déterminé par lesdits moyens de détermination de chronométrage de symbole (40), afin de mettre sous forme de transformée de Fourier le symbole effectif en vue de démoduler le signal OFDM reçu.

MODULATION VECTOR →

```
┌──────────────┐      ┌──────────────┐      ┌──────────────┐
│ INVERSE      │      │ GUARD-       │      │ QUADRATURE   │
│ FOURIER-     │ →    │ PERIOD       │ →    │ MODURATION   │ → OFDM
│ TRANS-       │      │ ADDITION     │      │ CIRCUIT      │   SIGNAL
│ FORMATION    │      │ CIRCUIT      │      │              │
│ CIRCUIT      │      │              │      │              │
└──────────────┘      └──────────────┘      └──────────────┘
      11                    12                    13
                                                        14
                                                       (~)
```

SYMBOL TIMING

# F I G. 1

```
          |←──────────── SYMBOL ────────────→|
GUARD     |                                  |
PERIOD    |←── EFFECTIVE ──→|
          |   SYMBOL PERIOD |
          |←→|←────────────→|
BASE BAND |        COPY              COPY
OFDM SIGNAL|    ┌─────────┐      ┌─────────┐
          |    ↓         |      ↓         |
  ──┬──┬──┬──┬─────────┬──┬─────────┬──┬──
    │SO│  │G1│   S1    │G2│   S2    │G3│
  ──┴──┴──┴──┴─────────┴──┴─────────┴──┴──
```

# F I G. 2

```
           15               17               18
      ┌──────────────┐ ┌──────────────┐ ┌──────────────┐
OFDM  │ QUADRATURE   │ │ GUARD-PERIOD │ │ FOURIER      │
SIGNAL│ DEMODURATION │→│ REMOVAL      │→│ TRANSFOR-    │→ DEMODULATED
   →  │ CIRCUIT      │ │ CIRCUIT      │ │ MATION       │  VECTOR
      │              │ │              │ │ CIRCUIT      │
      └──────────────┘ └──────────────┘ └──────────────┘
            ↑                ↑                ↑
           (~)               │                │
            16               └────────┬───────┘
                                      │
                              SYMBOL TIMING
```

# F I G. 3

OFDM SIGNAL

|SYMBOL|SYMBOL|SYMBOL|

| DATA | NULL | | DATA | DATA | DATA | |

REFERENCE

# FIG. 4

OFDM
SIGNAL

21

QUADRATURE
DETECTION
CIRCUIT

22

FOURIER-
TRANS-
FORMATION
CIRCUIT

DEMODULATED
VECTOR

23

SYMBOL TIMING
DETERMINATION
CIRCUIT

24

CONSTELLATION
ANALYZING
CIRCUIT

27

CLOCK
GENERATING
CIRCUIT

25

SAMPLING
FREQUENCY
CONTROL
CIRCUIT

26

CARRIER-
WAVE
FREQUENCY
CONTROL
CIRCUIT

# FIG. 5

F I G . 6

FIG. 7

FIG. 8A

FIG. 8B

FIG. 9

341  342
34 ⟍⟍⟍    Z⁻¹    Z⁻¹

-j ⟋ 343    1 ⟋ 344    345    j

346    347

+    +

FIG. 10

AMPLITUDE

FREQUENCY

-1/2T    0    1/2T

FIG. 11

351    352
35 ⟍⟍⟍    Z⁻¹    Z⁻¹

j ⟋ 353    1 ⟋ 354    355 ⟍    -j

356    357

+    +

FIG. 12

AMPLITUDE

FREQUENCY

-1/2T    0    1/2T

36

362

361
CONJUGATION CIRCUIT

363
SHIFT REGISTER

364
ADDITION CIRCUIT

CORRELATION VECTOR

F I G . 1 3

36

362

365

361
CONJUGATION CIRCUIT

367
α

D

366

CORRELATION VECTOR

F I G . 1 4

27

F I G. 1 5 A

F I G. 1 5 B

F I G. 1 5 C

EP 0 798 903 B1

SYMBOL TIMING

FIG. 16

F I G. 1 7

F I G. 1 8

AMPLITUDE

F I G. 1 9

FREQUENCY

-1/2T          0          1/2T

FIG. 20

FIG. 21

FIG. 22

F I G. 2 3

EP 0 798 903 B1

F I G . 2 4

EP 0 798 903 B1

F I G . 2 5

EP 0 798 903 B1

F I G . 2 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0653858 A

- JP 7143096 A